# EUROPÄISCHE PATENTSCHRIFT

(11) **EP 3 515 619 B1**
(45) Veröffentlichungstag und Bekanntmachung des Hinweises auf die Patenterteilung: **01.02.2023**
(21) Anmeldenummer: 17777553.3
(22) Anmeldetag: 26.09.2017
(51) Int. Cl.: B21D 19/08

(54) **WERKZEUG, WERKZEUGMASCHINE UND VERFAHREN ZUM BEARBEITEN VON PLATTENFÖRMIGEN WERKSTÜCKEN**
TOOL, MACHINE TOOL, AND METHOD FOR MACHINING PLANAR WORKPIECES
OUTIL, MACHINE-OUTIL ET PROCÉDÉ D'USINAGE DE PIÈCES EN FORME DE PLAQUE

(30) Priorität: 26.09.2016 DE 102016118175
(43) Veröffentlichungstag der Anmeldung: 31.07.2019
(73) Patentinhaber: Trumpf Werkzeugmaschinen GmbH + Co. KG, 71254 Ditzingen (DE)
(72) Erfinder: WILHELM, Markus, 70839 Gerlingen (DE); HANK, Rainer, 71735 Eberdingen (DE); KLINKHAMMER, Marc, 71254 Ditzingen (DE); SCHINDEWOLF, Leonard, 71277 Rutesheim (DE); OCKENFUSS, Simon, 71034 Böblingen (DE); KAPPES, Jens, 70771 Leinfelden-Echterdingen (DE); TRÄNKLEIN, Dennis, 71154 Nufringen (DE); TATARCZYK, Alexander, 71229 Höfingen (DE); NEUPERT, Jörg, 70499 Stuttgart (DE); BITTO, Dominik, 70825 Münchingen (DE); MAATZ, Markus, 70771 Leinfelden-Echterdingen (DE); JAKISCH, Christian, 95488 Eckersdorf (DE)
(74) Vertreter: Mammel und Maser Patentanwälte PartG mbB
(86) Internationale Anmeldenummer: PCT/EP2017/074335
(87) Internationale Veröffentlichungsnummer: WO 2018/055193

(56) Entgegenhaltungen:
- EP-A1- 0 610 706
- EP-A1- 1 584 385
- EP-B1- 0 089 904

## Beschreibung

Die Erfindung betrifft ein Werkzeug, eine Werkzeugmaschine sowie ein Verfahren zum Bearbeiten von plattenförmigen Werkstücken, insbesondere Blechen.

Aus der EP 1 584 385 A1 ist ein Biegewerkzeug zum Biegen von Werkstücken, insbesondere von Blechen, entlang einer Biegelinie bekannt. Dieses Werkzeug umfasst ein Oberwerkzeug mit einem Grundkörper, an welchem ein Werkzeugkörper mit einer Biegekante vorgesehen ist. Diesem gegenüberliegend ist ein Unterwerkzeug vorgesehen, welches einen Gegenwerkzeugkörper mit einer Biegekante aufweist. Benachbart zum Gegenwerkzeugkörper ist ein Gegenhalter am Unterwerkzeug vorgesehen. Das Werkstück liegt auf dem Gegenhalter und der Biegekante des Gegenwerkzeugs am Unterwerkzeug auf. Zum Einbringen einer Biegekante in das Werkstück wird das Oberwerkzeug auf das Unterwerkzeug zubewegt. Darauffolgend wird mittels des Werkzeugkörpers des Oberwerkzeugs der Gegenhalter gegenüber der Biegekante des Gegenwerkzeugkörpers in Hubrichtung des Oberwerkzeugs verfahren, wobei darauffolgend bewegungsgekoppelt eine Schwenkbewegung des Gegenwerkzeugkörpers angesteuert wird, sodass eine Lasche des Werkstücks um die Biegekante des Werkzeugkörpers am Oberwerkzeug gebogen wird. Dadurch können Biegewinkel von größer als 90° in die Lasche des Werkstücks eingebracht werden. Beim Auseinanderfahren des Oberwerkzeugs zum Unterwerkzeug wird der schwenkbare Gegenwerkzeugkörper zurückgeschwenkt, bevor das Oberwerkzeug vom Gegenhalter abgehoben wird.

Aus der EP 0 610 706 A1 ist des Weiteren ein Biegewerkzeug bekannt, bei welchem zur Herstellung zur Abkantung von größer als 90° eine Schwenkbewegung eines Gegenwerkzeugkörpers angesteuert wird.

Aus der EP 0 089 904 B1 ist des Weiteren ein Biegewerkzeug bekannt. Bei diesem Biegewerkzeug ist ein am Grundkörper des Unterwerkzeugs fest angeordneter Gegenwerkzeugkörper mit einer Biegekante bekannt. Am Oberwerkzeug ist feststehend ein Gegenhalter vorgesehen und benachbart zum Gegenhalter ein schwenkbar angeordneter Werkzeugkörper, welcher über eine Kurvensteuerung nach dem Klemmen des Werkstücks zwischen dem Gegenwerkzeugkörper des Unterwerkzeugs und dem Gegenhalter des Oberwerkzeugs mit einer Schwenkbewegung angesteuert wird, um in die Lasche des Werkstücks eine Biegung von größer 90° einzubringen. Zur Entnahme dieses gebogenen Werkstücks ist es erforderlich, dass zunächst eine Gegenschwenkbewegung des Werkzeugkörpers in eine Ausgangsposition angesteuert wird, um das Oberwerkzeug gegenüber dem Unterwerkzeug abzuheben.

Der Erfindung liegt die Aufgabe zugrunde, ein Werkzeug vorzuschlagen, welches einen einfachen konstruktiven Aufbau aufweist und zur Bearbeitung von Abkantungen mit einem Winkel von größer als 90° geeignet ist. Des Weiteren liegt der Erfindung zugrunde, eine Werkzeugmaschine zum Bearbeiten von plattenförmigen Werkstücken vorzuschlagen, welche eine Herstellung von Hinterschneidungen in einem Werkstück ermöglicht. Darüber hinaus liegt der Erfindung die Aufgabe zugrunde, ein Verfahren zum Bearbeiten von plattenförmigen Werkstücken vorzuschlagen, durch welches die Herstellung von Abkantungen mit einer Hinterschneidung - also einer Abkantung an einem Schenkel des Werkstücks mit einem Winkel von größer als 90° - in einfacher Weise ermöglicht wird.

Die der Erfindung zugrundeliegende Aufgabe wird durch ein Werkzeug zum Bearbeiten von plattenförmigen Werkstücken gelöst, bei welchem eine Biegekante des Werkzeugkörpers des Oberwerkzeugs ortsfest zum Grundkörper des Oberwerkzeugs angeordnet ist sowie die Biegekante des Gegenwerkzeugkörpers vom Unterwerkzeug ortsfest zum Grundkörper des Unterwerkzeugs angeordnet ist und die Biegekante des Oberwerkzeugs einer Hinterschneidung am Werkzeugkörper und die Biegekante des Unterwerkzeugs einer Hinterschneidung am Gegenwerkzeugkörper zugeordnet ist. Durch ein solches Werkzeug wird der Werkzeugkörper und der Gegenwerkzeugkörper fest - also nicht schwenkbar - am jeweiligen Grundkörper des Oberwerkzeugs und Unterwerkzeugs angeordnet, wodurch ein einfacher und kostengünstiger Aufbau des Werkzeugs ohne Mechanik gegeben ist. Die jeweiligen Biegekanten des Ober- und Unterwerkzeugs können in den jeweiligen Hinterschneidungen positioniert werden, sodass beispielsweise Abkantungen möglich sind, bei welchen die abgekantete Lasche einen Biegewinkel von größer als 90° einnehmen kann.

Bevorzugt weist das Werkzeug am Oberwerkzeug einen Werkzeugkörper auf, der einen Druckkörper umfasst und die Biegekante an einem gegenüber dem Druckkörper hervorstehenden Abschnitt vorgesehen ist, sodass zwischen dem Grundkörper des Oberwerkzeugs und der am hervorstehenden Abschnitt angeordneten Biegekante eine Hinterschneidung gebildet ist. Dies ermöglicht eine kompakte Ausgestaltung des Werkzeugkörpers. Darüber hinaus können große Druckkräfte übertragen werden.

Bevorzugt ist der Gegenwerkzeugkörper des Unterwerkzeugs analog zum Werkzeugkörper des Oberwerkzeugs ausgebildet. Dieser weist bevorzugt einen Druckkörper auf, wobei die Biegekante an einem gegenüber dem Druckkörper hervorstehenden Abschnitt vorgesehen ist, sodass zwischen dem Grundkörper und der an dem hervorstehenden Abschnitt angeordneten Biegekante des Gegenwerkzeugkörpers eine Hinterschneidung gebildet ist. Dies ermöglicht eine geometrisch einfache Ausgestaltung des Werkzeugs.

Bevorzugt weist der am Unterwerkzeug angeordnete Gegenhalter eine Gegenhaltefläche auf, die parallel zur Druckfläche am Druckkörper des Werkzeugkörpers ausgerichtet ist. Dadurch kann vor dem Einleiten einer Biegung oder Abkantung das Werkstück zwischen dem Gegenhalter und dem Werkzeugkörper zusätzlich geklemmt werden. Das zu bearbeitende Werkstück ist bevorzugt durch zumindest eine Greifvorrichtung der Werkzeugmaschine ausgerichtet und in Position gehalten.

Vorteilhafterweise ist die Gegenhaltefläche des Gegenhalters in einer Ausgangsposition zum Grundkörper des Unterwerkzeugs in einer Ebene zur Biegekante des Gegenwerkzeugkörpers ausgerichtet. Alternativ kann die Gegenhalterfläche auch gegenüber der Biegekante des Gegenwerkzeugkörpers erhöht sein. Im letzteren Fall kann dadurch eine Vorspannung in das Werkstück eingebracht werden.

Der Gegenwerkzeugkörper ist vorteilhafterweise außermittig zur Positionsachse des Grundkörpers des Unterwerkzeugs und der Gegenhalter mit Abstand zur Biegekante des Gegenwerkzeugkörpers angeordnet. Dadurch können größere Abkantungen eingebracht werden. Alternativ kann der Gegenwerkzeugkörper beziehungsweise die Biegekante am Gegenwerkzeugkörper auch in der Positionsachse des Grundkörpers des Unterwerkzeugs liegen.

Des Weiteren kann die Biegekante des Werkzeugkörpers außermittig zur Positionsachse des Grundkörpers vom Oberwerkzeug vorgesehen sein. Eine solche Ausgestaltung ist bevorzugt dann vorgesehen, wenn größere beziehungsweise längere Abkantungen vorgenommen werden sollen. Für eine druckkraftoptimierte Anordnung ist die Biegekante des Werkzeugkörpers bevorzugt ist der Positionierachse angeordnet.

Bevorzugt ist an dem hervorstehenden Abschnitt des Werkzeugkörpers wenigstens die eine Biegekante zwischen einer Druckfläche und einer Freifläche gebildet, wobei diese Druckfläche und die Freifläche jeweils ausgehend von der Biegekante in einem Winkel von 90° oder weniger als 90° zueinander ausgerichtet sind. Bevorzugt ist an dem hervorstehenden Abschnitt eine weitere Biegekante vorgesehen, welche die Freifläche begrenzt. Somit grenzen an die Freifläche eine erste und eine zweite Biegekante an. Zwischen der weiteren beziehungsweise zweiten Biegekante und dem Werkzeuggrundkörper oder einem dazwischen angeordneten Abstreifer ist bevorzugt eine Hinterschneidung gebildet. Diese Anordnung weist den Vorteil auf, dass ein steifer hervorstehender Abschnitt ausgebildet ist, der mit einer ersten Biegekante zunächst eine Biegung eines Schenkels um beispielsweise 90° ermöglicht und darauffolgend eine weitere Biegung des Schenkel um einen über 90° hinausgehenden Winkel durch die zweite Biegekante ermöglicht wird, sodass eine Abkantung mit einem Winkel von weniger als 90° gebildet werden kann. Folglich ist zwischen dem Werkstück und dem abgekanteten Schenkel eine Hinterschneidung gebildet, die einen Winkel von weniger als 90° aufweist.

Des Weiteren kann an dem Druckkörper des Werkzeugkörpers am Oberwerkzeug eine dritte Biegekante vorgesehen sein, welche die Druckfläche begrenzt. Somit ist der ersten Biegekante eine dritte Biegekante zugeordnet. Auch an dieser Biegekante kann sich wiederum eine Freifläche anschließen, wodurch zwischen der Biegekante und dem Werkzeugkörper eine Hinterschneidung gebildet ist, um eine Biegung am Werkstück von kleiner 90° durchzuführen.

Der Gegenwerkzeugkörper weist bevorzugt einen hervorstehenden Abschnitt auf, der eine Auflagefläche und zumindest eine daran anschließende Freifläche umfasst. Die Auflagefläche ist durch die Biegekante begrenzt. An die Biegekante anschließend und zur Auflagefläche ausgerichtet erstreckt sich die Freifläche vorzugsweise in einem Winkel von 90° oder weniger als 90°. Der Gegenwerkzeugkörper kann auch zumindest eine zweite Biegekante aufweisen, die der ersten Biegekante gegenüberliegt und die Auflagefläche begrenzt.

Alternativ kann der hervorstehende Abschnitt am Werkzeugkörper und/oder Gegenwerkzeugkörper im Querschnitt gesehen einen rechteckförmigen Verlauf aufweisen, sodass beispielsweise ausgehend vom Druckkörper der hervorstehende Abschnitt sich L-förmig erstreckt.

Des Weiteren ist bevorzugt vorgesehen, dass die Ausrichtung der Freifläche am Werkzeugkörper und die Freifläche am Gegenwerkzeugkörper gleich sind. Zusätzlich kann auch noch die Ausrichtung der Freifläche im Winkel am Werkzeugkörper und Gegenwerkzeugkörper übereinstimmen. Anwendungsspezifisch können diese auch voneinander abweichen.

Die Biegekante am Werkzeugkörper und/oder Gegenwerkzeugkörper können also als eine Körperkante am hervorstehenden Abschnitt ausgebildet sein mit einem vorbestimmten Umformradius. Alternativ kann die Biegekante auch durch eine rotierende Rolle ausgebildet sein.

Eine weitere vorteilhafte Ausgestaltung des Werkzeugs sieht vor, dass der Gegenhalter in Richtung auf die Oberseite des Unterwerkzeugs verfahrbar am Grundkörper des Unterwerkzeugs angeordnet ist.

Bevorzugt ist der Gegenhalter gegen zumindest ein Rückstellelement in Richtung auf den Grundkörper eintauchbar. Dies weist den Vorteil auf, dass während dem Biegeprozess das Werkstück zwischen dem Oberwerkzeug und dem Unterwerkzeug geklemmt gehalten werden kann. Dadurch wird eine Verbiegung des Werkstücks benachbart zur Abkantung reduziert.

Die der Erfindung zugrundeliegende Aufgabe wird des Weiteren durch eine Werkzeugmaschine zum Bearbeiten von plattenförmigen Werkstücken, vorzugsweise Blechen, gelöst, bei welcher ein Oberwerkzeug vorgesehen ist, welches entlang einer Hubachse mit einer Hubantriebsvorrichtung in Richtung auf ein mit dem Oberwerkzeug zu bearbeitenden Werkstück und in Gegenrichtung bewegbar ist und welches entlang einer senkrecht zur Hubachse verlaufenden oberen Positionierachse positionierbar ist und mit einer motorischen Antriebsanordnung entlang der oberen Positionierachse verfahrbar ist. Des Weiteren ist ein Unterwerkzeug vorgesehen, welches zum Oberwerkzeug ausgerichtet und entlang einer unteren Positionierachse positionierbar ist, die senkrecht zur Hubachse des Oberwerkzeugs ausgerichtet und mit einer motorischen Antriebsanordnung entlang der unteren Positionierachse verfahrbar ist. Diese Werkzeugmaschine weist eine Steuerung auf, durch welche die motorische Antriebsanordnung zum Verfahren des Ober- und Unterwerkzeugs ansteuerbar sind. Dabei ist vorgesehen, dass die Verfahrbewegung des Oberwerkzeugs entlang der oberen Positionierachse und die Verfahrbewegung des Unterwerkzeugs entlang der unteren Positionierachse jeweils unabhängig voneinander ansteuerbar sind und ein Werkzeug nach einer der vorbeschriebenen Ausführungsformen eingesetzt wird. Dadurch kann in einfacher Weise eine Abkantung in das Werkstück eingebracht werden. Insbesondere kann die Abkantung oder Biegung in dem Maße eingebracht werden, dass ein Biegewinkel von größer als 90° in das Werkstück eingebracht werden kann. Durch diese Werkzeugmaschine mit dem vorbeschriebenen Werkzeug können somit Hinterschneidungen an einer Lasche oder Abkantungen mit einem Biegewinkel von größer als 90° eines Werkstücks eingebracht werden.

Vorteilhafterweise ist vorgesehen, dass das Oberwerkzeug und/oder das Unterwerkzeug mit einer Hubbewegung und/oder Drehbewegung um die Positionsachse ansteuerbar sind. Dadurch kann die Flexibilität in der Einbringung der Abkantung weiter erhöht sein.

Die der Erfindung zugrundeliegende Aufgabe wird des Weiteren durch ein Verfahren zum Bearbeiten von plattenförmigen Werkstücken gelöst, bei welchem ein Werkzeug gemäß einer der vorbeschriebenen Ausführungsformen eingesetzt wird. Das Oberwerkzeug und/oder das Unterwerkzeug können zumindest mit einer Hubbewegung und einer darauffolgenden Verfahrbewegung entlang von zumindest einer Positionierachse angesteuert werden, um eine Biegung oder Abkantung an einem Werkstück einzubringen, insbesondere mit einem Biegewinkel von kleiner 90°. Bei einem Biegewinkel von kleiner 90° ist zwischen dem Werkstück und dem umgebogenen Schenkel eine Hinterschneidung gebildet.

Eine erste bevorzugte Ausführungsform des Verfahrens sieht vor, dass zur Herstellung der Abkantung an dem Schenkel des Werkstücks mit einem Biegewinkel von kleiner als 90° der Schenkel des Werkstücks auf den Gegenhalter und die Biegekante des Gegenwerkzeugkörpers am Unterwerkzeug aufgelegt werden. Darauffolgend wird das Oberwerkzeug und/oder Unterwerkzeug aufeinander zubewegt. In einer ersten Biegephase werden die Biegekante des Oberwerkzeugs und/oder die Biegekante des Unterwerkzeugs aneinander vorbeigeführt, wobei das Oberwerkzeug und das Unterwerkzeug entlang deren Positionsachsen verfahren wird. Zwischen den einander zugeordneten Biegekanten wird der Schenkel des Werkstücks gebogen, insbesondere um 90°. In einer zweiten Biegephase werden das Oberwerkzeug und/oder das Unterwerkzeug entlang deren Positionierachsen verfahren. Die Positionierachse ist senkrecht zur Positionsachse ausgerichtet. Dadurch wird das Oberwerkzeug und/oder Unterwerkzeug bezüglich deren Biegekanten in die jeweilige Hinterschneidung des Oberwerkzeugs und des Unterwerkzeugs hinein bewegt, sodass die Biegekante des Gegenwerkzeugkörpers und die Biegekante des Werkzeugkörpers einander hintergreifen. Dadurch wird die Biegung des Schenkels um kleiner als 90° erzielt. Darauffolgend wird nach der Einbringung der Abkantung eine Freifahrbewegung angesteuert.

Eine alternative Ausgestaltung des Verfahrens zur Herstellung der Abkantung an den Schenkeln des Werkstücks mit einem Winkel von kleiner als 90° ist vorgesehen, dass nach dem Auflegen des Schenkels des Werkstücks auf dem Gegenhalter und der Biegekante des Gegenwerkzeugkörpers das Oberwerkzeug und/oder Unterwerkzeug aufeinander zubewegt werden. Darauffolgend wird das Werkstück zwischen der Druckfläche des Werkzeugkörpers und der Gegenhaltefläche des Gegenhalters geklemmt gehalten. Bei einer weiteren Verfahrbewegung entlang der Hubrichtung des Ober- und/oder Unterwerkzeugs wird unter Aufrechterhaltung der Klemmung des Werkstücks eine erste Biegung in den Schenkel eingeleitet. In einer weiteren Biegephase werden das Oberwerkzeug- und/oder Unterwerkzeug entlang deren Positionsachsen verfahren, bis die Biegekante des Oberwerkzeugs und die Biegekante des Unterwerkzeugs einander hintergreifen. Eine Biegung des Schenkels zum Werkstückträger von kleiner als 90° ist die Folge. Anschließend erfolgt wieder eine Freifahrbewegung, sodass das Oberwerkzeug und/oder Unterwerkzeug in eine Ausgangsposition zurückgeführt wird.

Bevorzugt erfolgt bei einem Gegenhalter am Unterwerkzeug, der eine Eintauchbewegung zum Grundkörper durchführen kann, nach dem Einbringen der Abkantung ein selbständiges Rücksetzen durch zumindest ein Rückstellelement.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht der erfindungsgemäßen Werkzeugmaschine,
Figur 2 eine schematisierte Darstellung des grundsätzlichen Aufbaus einer Hubantriebsvorrichtung und eines motorischen Antriebes gemäß Figur 1,
Figur 3 ein schematisches Diagramm einer überlagerten Hubbewegung in Y- und Z-Richtung des Stößels gemäß Figur 1,
Figur 4 ein schematisches Diagramm einer weiteren überlagerten Hubbewegung in Y- und Z-Richtung des Stößels gemäß Figur 1,
Figur 5 eine schematische Ansicht von oben auf die Werkzeugmaschine gemäß Figur 1 mit Werkstückauflageflächen,
Figur 6 eine schematische Seitenansicht einer ersten Ausführungsform eines Werkzeugs mit einem Oberwerkzeug und einem Unterwerkzeug in einer Ausgangsposition,
Figur 7 eine schematische Seitenansicht des Werkzeugs gemäß Figur 6 nach einer ersten Biegephase,
Figur 8 eine schematische Seitenansicht des Werkzeugs gemäß Figur 6 nach einer zweiten Biegephase,
Figur 9 eine schematische Seitenansicht des Werkzeugs gemäß Figur 6 mit einer Freifahrbewegung durch das Oberwerkzeug,
Figur 10 eine schematische Seitenansicht des Werkzeugs gemäß Figur 6 mit einer ersten Freifahrbewegung des Unterwerkzeugs,
Figur 11 eine schematische Seitenansicht des Werkzeugs gemäß Figur 6 mit einer alternativen Freifahrbewegung des Unterwerkzeugs,
Figur 12 eine schematische Seitenansicht einer alternativen Ausführungsform des Werkzeugs zu Figur 6,
Figur 13 eine schematische Seitenansicht des Werkzeugs gemäß Figur 12 in einer ersten Arbeitsphase,
Figur 14 eine schematische Ansicht des Werkzeugs gemäß Figur 12 in einer weiteren Arbeitsphase,
Figur 15 eine schematische Seitenansicht des Werkzeugs gemäß Figur 12 nach einer ersten Biegephase,
Figur 16 eine schematische Seitenansicht des Werkzeugs gemäß Figur 12 nach einer zweiten Biegephase,
Figur 17 eine schematische Seitenansicht des Werkzeugs gemäß Figur 12 nach einer ersten Freifahrbewegung des Oberwerkzeugs, und
Figur 18 eine schematische Seitenansicht des Werkzeugs gemäß Figur 12 nach einer weiteren Freifahrbewegung des Oberwerkzeugs vom Unterwerkzeug.

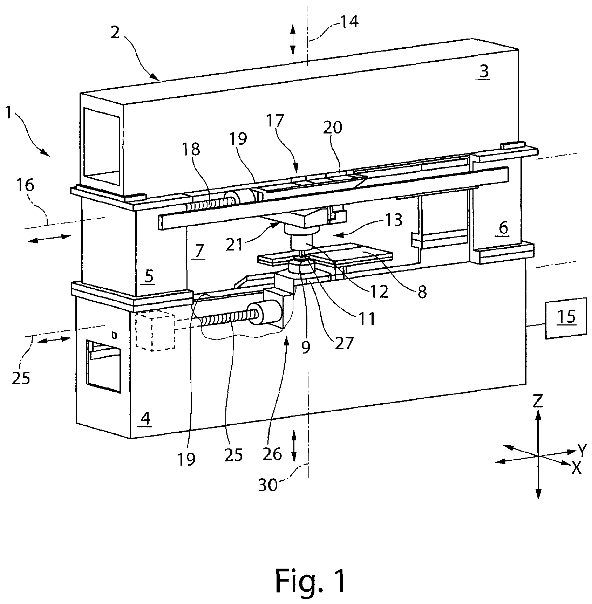

In Figur 1 ist eine Werkzeugmaschine 1 dargestellt, welche als Stanzpresse ausgebildet ist. Diese Werkzeugmaschine 1 umfasst eine Tragstruktur mit einem geschlossenen Maschinenrahmen 2. Dieser umfasst zwei horizontale Rahmenschenkel 3, 4 sowie zwei vertikale Rahmenschenkel 5 und 6. Der Maschinenrahmen 2 umschließt einen Rahmeninnenraum 7, der den Arbeitsbereich der Werkzeugmaschine 1 mit einem Oberwerkzeug 11 und einem Unterwerkzeug 9 bildet.

Die Werkzeugmaschine 1 dient zur Bearbeitung von plattenförmigen Werkstücken 10, welche der Einfachheit halber in Figur 1 nicht dargestellt sind und können zu Bearbeitungszwecken im Rahmeninnenraum 7 angeordnet werden. Ein zu bearbeitendes Werkstück 10 wird auf eine im Rahmeninnenraum 7 vorgesehene Werkstückabstützung 8 abgelegt. In einer Aussparung der Werkstückabstützung 8 ist am unteren horizontalen Rahmenschenkel 4 des Maschinenrahmens 2 das Unterwerkzeug 9 beispielsweise in Form einer Stanzmatrize gelagert. Diese Stanzmatrize kann mit einer Matrizenöffnung versehen sein. Bei einer Stanzbearbeitung taucht in die Matrizenöffnung des als Stanzmatrize ausgebildeten Unterwerkzeuges das als Stanzstempel ausgebildete Oberwerkzeug 11 ein.

Das Oberwerkzeug 11 und Unterwerkzeug 9 kann anstelle von einem Stanzstempel und einer Stanzmatrize auch als ein Biegestempel sowie eine Biegematrize zum Umformen von Werkstücken 10 eingesetzt werden.

Das Oberwerkzeug 11 ist in einer Werkzeugaufnahme an einem unteren Ende eines Stößels 12 fixiert. Der Stößel 12 ist Teil einer Hubantriebsvorrichtung 13, mittels derer das Oberwerkzeug 11 in eine Hubrichtung entlang einer Hubachse 14 bewegt werden kann. Die Hubachse 14 verläuft in Richtung der Z-Achse des Koordinatensystems einer in Figur 1 angedeuteten numerischen Steuerung 15 der Werkzeugmaschine 1. Senkrecht zur Hubachse 14 kann die Hubantriebsvorrichtung 13 längs einer Positionierachse 16 in Richtung des Doppelpfeils bewegt werden. Die Positionierachse 16 verläuft in Richtung der Y-Richtung des Koordinatensystems der numerischen Steuerung 15. Die das Oberwerkzeug 11 aufnehmende Hubantriebsvorrichtung 13 wird mittels eines motorischen Antriebs 17 längs der Positionierachse 16 verfahren.

Die Bewegung des Stößels 12 entlang der Hubachse 14 und die Positionierung der Hubantriebsvorrichtung 13 entlang der Positionierachse 16 erfolgen mittels eines motorischen Antriebes 17 in Form einer Antriebsanordnung 17, insbesondere Spindelantriebsanordnung, mit einer in Richtung der Positionierachse 16 verlaufenden und mit dem Maschinenrahmen 2 fest verbundenen Antriebsspindel 18. Geführt wird die Hubantriebsvorrichtung 13 bei Bewegungen längs der Positionierachse 16 an drei Führungsschienen 19 des oberen Rahmenschenkels 3, von denen in Figur 1 zwei Führungsschienen 19 zu erkennen sind. Die eine übrige Führungsschiene 19 verläuft parallel zur sichtbaren Führungsschiene 19 und ist von dieser in Richtung X-Achse des Koordinatensystems der numerischen Steuerung 15 beabstandet. Auf den Führungsschienen 19 laufen Führungsschuhe 20 der Hubantriebsvorrichtung 13. Der gegenseitige Eingriff der Führungsschiene 19 und der Führungsschuhe 20 ist dergestalt, dass diese Verbindung zwischen den Führungsschienen 19 und den Führungsschuhen 20 auch eine in vertikaler Richtung wirkende Last aufnehmen kann. Dementsprechend ist die Hubvorrichtung 13 über die Führungsschuhe 20 und die Führungsschienen 19 am Maschinenrahmen 2 aufgehängt. Ein weiterer Bestandteil der Hubantriebsvorrichtung 13 ist ein Keilgetriebe 21, durch welches eine Lage des Oberwerkzeuges 11 relativ zum Unterwerkzeug 9 einstellbar ist.

Das Unterwerkzeug 9 ist entlang einer unteren Positionierachse 25 verfahrbar aufgenommen. Diese untere Positionierachse 25 verläuft in Richtung der Y-Achse des Koordinatensystems der numerischen Steuerung 15. Vorzugsweise ist die untere Positionierachse 25 parallel zur oberen Positionierachse 16 ausgerichtet. Das Unterwerkzeug 9 kann unmittelbar an der unteren Positionierachse 16 mit einer motorischen Antriebsanordnung 26 entlang der Positionierachse 25 verfahren werden. Alternativ oder ergänzend kann das Unterwerkzeug 9 auch an einer Hubantriebsvorrichtung 27 vorgesehen sein, welche entlang der unteren Positionierachse 25 mittels der motorischen Antriebsanordnung 26 verfahrbar ist. Diese Antriebsanordnung 26 ist bevorzugt als Spindelantriebsanordnung ausgebildet. Die untere Hubantriebsvorrichtung 27 kann im Aufbau der oberen Hubantriebsvorrichtung 13 entsprechen. Ebenfalls kann die motorische Antriebsanordnung 26 der motorischen Antriebsanordnung 17 entsprechen.

Die untere Hubantriebsvorrichtung 27 ist ebenfalls an einem unteren horizontalen Rahmenschenkel 4 zugeordneten Führungsschienen 19 verschiebbar gelagert. Auf den Führungsschienen 19 laufen Führungsschuhe 20 der Hubantriebsvorrichtung 27, so dass die Verbindung zwischen den Führungsschienen 19 und Führungsschuhen 20 am Unterwerkzeug 9 auch eine in vertikaler Richtung wirkende Last aufnehmen kann. Dementsprechend ist auch die Hubantriebsvorrichtung 27 über die Führungsschuhe 20 und die Führungsschienen 19 am Maschinenrahmen 2 und beabstandet zu den Führungsschienen 19 und Führungsschuhen 20 der oberen Hubantriebsvorrichtung 13 aufgehängt. Auch die Hubantriebsvorrichtung 27 kann ein Keilgetriebe 21 umfassen, durch welches die Lage beziehungsweise Höhe des Unterwerkzeuges 9 entlang der Z-Achse einstellbar ist.

Durch die numerische Steuerung 15 können sowohl die motorischen Antriebe 17 für eine Verfahrbewegung des Oberwerkzeuges 11 entlang der oberen Positionierachse 16, als auch der oder die motorischen Antriebe 26 für eine Verfahrbewegung des Unterwerkzeuges 9 entlang der unteren Positionierachse 25 unabhängig voneinander angesteuert werden. Somit ist das Ober- und Unterwerkzeug 11, 9 synchron in Richtung der Y-Achse des Koordinatensystems verfahrbar. Ebenso kann eine unabhängige Verfahrbewegung des Ober- und Unterwerkzeuges 11, 9 auch in verschiedene Richtungen angesteuert werden. Diese unabhängige Verfahrbewegung des Ober- und Unterwerkzeuges 11, 9 kann zeitgleich angesteuert werden. Durch die Entkopplung der Verfahrbewegung zwischen dem Oberwerkzeug 11 und dem Unterwerkzeug 9 kann eine erhöhte Flexibilität in der Bearbeitung von Werkstücken 10 erzielt werden. Auch kann das Ober- und Unterwerkzeug 11, 9 zur Bearbeitung der Werkstücke 10 in vielfältiger Weise ausgebildet sein.

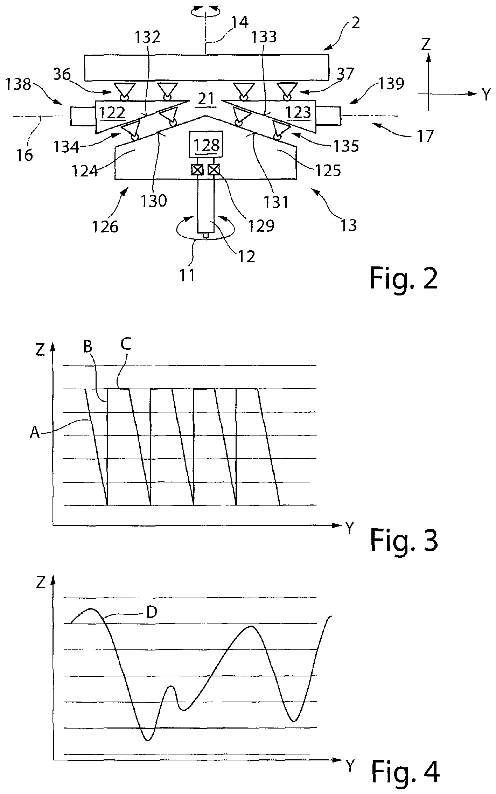

Ein Bestandteil der Hubantriebsvorrichtung 13 ist das Keilgetriebe 21, welches in Figur 2 dargestellt ist. Das Keilgetriebe 21 umfasst zwei antriebsseitige Keilgetriebeelemente 122, 123, sowie zwei abtriebsseitige Keilgetriebeelemente 124, 125. Letztere sind konstruktiv zu einer Baueinheit in Form eines abtriebsseitigen Doppelkeils 126 zusammengefasst. An dem abtriebsseitigen Doppelkeil 126 ist der Stößel 12 um die Hubachse 14 drehbar gelagert. Eine motorische Drehantriebsvorrichtung 128 ist in dem abtriebsseitigen Doppelkeil 126 untergebracht und verfährt den Stößel 12 bei Bedarf entlang der Hubachse 14. Dabei ist sowohl eine Links- als auch eine Rechtsdrehung des Stößels 12 gemäß dem Doppelpfeil in Figur 2 möglich. Eine Stößellagerung 129 ist schematisch dargestellt. Zum einen erlaubt die Stößellagerung 129 reibungsarme Drehbewegungen des Stößels 12 um die Hubachse 14, zum anderen lagert die Stößellagerung 129 den Stößel 12 in axialer Richtung und trägt dementsprechend Lasten, die auf den Stößel 12 in Richtung der Hubachse 14 wirken, in den abtriebsseitigen Doppelkeil 126 ab.

Der abtriebsseitige Doppelkeil 126 wird durch eine Keilfläche 130, sowie durch eine Keilfläche 131 des abtriebsseitigen Getriebeelementes 125 begrenzt. Den Keilflächen 130, 131 der abtriebsseitigen Keilgetriebeelemente 124, 125 liegen Keilflächen 132, 133 der antriebsseitigen Keilgetriebeelemente 122, 123 gegenüber. Durch Längsführungen 134, 135 sind das antriebsseitige Keilgetriebeelement 122 und das abtriebsseitige Keilgetriebeelement 124, sowie das antriebsseitige Keilgetriebeelement 123 und das abtriebsseitige Keilgetriebeelement 125 in Richtung der Y-Achse, das heißt in Richtung der Positionierachse 16 der Hubantriebsvorrichtung 13, relativ zueinander bewegbar geführt.

Das antriebsseitige Keilgetriebeelement 122 verfügt über eine motorische Antriebseinheit 138, das antriebsseitige Keilgetriebeelement 123 über eine motorische Antriebseinheit 139. Beide Antriebseinheiten 138, 139 gemeinsam bilden die Spindelantriebsanordnung 17.

Den motorischen Antriebseinheiten 138, 139 gemeinsam ist die in Figur 1 gezeigte Antriebsspindel 18 sowie die an dem Maschinenrahmen 2 gelagerte und folglich tragstrukturseitige Hubantriebsvorrichtung 13, 27.

Zu den motorischen Antriebseinheiten 138, 139 werden die antriebsseitigen Keilgetriebeelemente 122, 123 derart betrieben, dass diese sich entlang der Positionierachse 16 beispielsweise aufeinander zu bewegen, wodurch sich eine Relativbewegung zwischen den antriebsseitigen Keilgetriebeelementen 122, 123 einerseits und den abtriebsseitigen Keilgetriebeelementen 124, 125 anderseits ergibt. Infolge dieser Relativbewegung wird der abtriebsseitige Doppelkeil 126 und der daran gelagerte Stößel 12 entlang der Hubachse 14 nach unten bewegt. Der an dem Stößel 12 beispielsweise als Oberwerkzeug 11 montierte Stanzstempel führt einen Arbeitshub aus und bearbeitet dabei ein auf der Werkstückauflage 28, 29 bzw. der Werkstückabstützung 8 gelagertes Werkstück 10. Durch eine entgegengesetzte Bewegung der Antriebskeilelemente 122, 123 wird der Stößel 12 wiederum entlang der Hubachse 14 angehoben bzw. nach oben bewegt.

Die vorbeschriebene Hubantriebsvorrichtung 13 gemäß Figur 2 ist bevorzugt baugleich als untere Hubantriebsvorrichtung 27 ausgebildet und nimmt das Unterwerkzeug 9 auf.

In Figur 3 ist ein schematisches Diagramm einer möglichen Hubbewegung des Stößels 12 dargestellt. Das Diagramm zeigt einen Hubverlauf entlang der Y-Achse und der Z-Achse. Durch eine überlagerte Ansteuerung einer Verfahrbewegung des Stößels 12 entlang der Hubachse 14 und entlang der Positionierachse 16 kann beispielsweise eine schräg verlaufende Hubbewegung des Hubstößels 12 nach unten auf das Werkstück 10 zu angesteuert werden, wie dies durch die erste Gerade A dargestellt ist. Darauffolgend nach Durchführung des Hubes kann der Stößel 12 beispielsweise senkrecht abgehoben werden, wie dies durch die Gerade B dargestellt ist. Anschließend erfolgt beispielsweise eine ausschließliche Verfahrbewegung entlang der Y-Achse gemäß der Geraden C, um den Stößel 12 für eine neue Arbeitsposition zum Werkstück 10 zu positionieren. Darauffolgend kann sich beispielsweise die zuvor beschriebene Arbeitsabfolge wiederholen. Sofern für einen nachfolgenden Bearbeitungsschritt das Werkstück 10 auf der Werkstückauflagefläche 28, 29 verfahren wird, kann auch eine Verfahrbewegung entlang der Geraden C entfallen.

Die im Diagramm in Figur 3 dargestellte mögliche Hubbewegung des Stößels 12 am Oberwerkzeug 11 ist bevorzugt mit einem stillstehend gehaltenen Unterwerkzeug 9 kombiniert. Dabei ist das Unterwerkzeug 9 derart innerhalb des Maschinenrahmens 2 positioniert, dass am Ende eines Arbeitshubes des Oberwerkzeuges 11 das Ober- und Unterwerkzeug 11, 9 eine definierte Position einnehmen.

Dieser beispielhafte überlagerte Hubverlauf kann sowohl für das Oberwerkzeug 11 als auch das Unterwerkzeug 9 angesteuert werden. In Abhängigkeit der zu erfolgenden Bearbeitung des Werkstückes 10 kann eine überlagerte Hubbewegung des Oberwerkzeuges und/oder Unterwerkzeuges 11, 9 angesteuert werden.

In Figur 4 ist ein schematisches Diagramm dargestellt, welches eine Hubbewegung des Stößels 12 gemäß der beispielhaft dargestellten Linie D entlang einer Y-Achse und einer Z-Achse darstellt. Abweichend zu Figur 3 ist bei diesem Ausführungsbeispiel vorgesehen, dass eine Hubbewegung des Stößels 12 einen Kurvenverlauf oder Bogenverlauf durchlaufen kann, indem eine Überlagerung der Verfahrbewegungen in Y-Richtung und Z-Richtung entsprechend durch die Steuerung 15 angesteuert wird. Durch eine solche flexible Überlagerung der Verfahrbewegungen in X- und Z-Richtung lassen sich spezifische Bearbeitungsaufgaben lösen. Die Ansteuerung eines solchen Kurvenverlaufes kann für das Oberwerkzeug 11 und/oder Unterwerkzeug 9 vorgesehen sein.

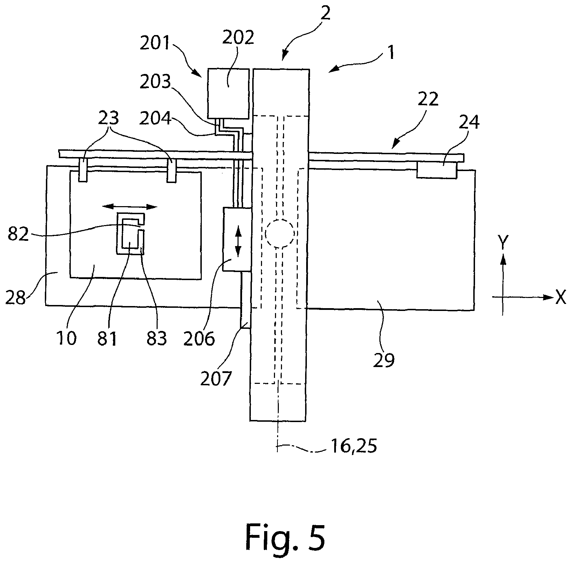

In Figur 5 ist eine schematische Ansicht auf die Werkzeugmaschine 1 gemäß Figur 1 dargestellt. An dem Maschinenrahmen 2 der Werkzeugmaschine 1 erstreckt sich seitlich jeweils eine Werkstückauflage 28, 29. Die Werkstückauflage 28 kann beispielsweise einer nicht näher dargestellten Beladestation zugeordnet sein, durch welche unbearbeitete Werkstücke 10 auf die Werkstückauflagefläche 28 aufgelegt werden. An die Werkstückauflagefläche 28, 29 angrenzend ist eine Vorschubeinrichtung 22 vorgesehen, welche mehrere Greifer 23 umfasst, um das auf die Werkstückauflage 28 aufgelegte Werkstück 10 zu greifen. Mittels der Vorschubeinrichtung 22 wird das Werkstück 10 in X-Richtung durch den Maschinenrahmen 2 hindurchgeführt. Vorzugsweise kann die Vorschubeinrichtung 22 auch in Y-Richtung verfahrbar angesteuert werden. Dadurch kann eine freie Verfahrbewegung des Werkstücks 10 in der X-Y Ebene vorgesehen sein. In Abhängigkeit der Arbeitsaufgabe kann das Werkstück 10 durch die Vorschubeinrichtung 22 sowohl in X-Richtung als auch entgegen der X-Richtung bewegbar sein. Diese Verfahrbewegung des Werkstücks 10 kann auf eine Verfahrbewegung des Oberwerkzeuges 11 und Unterwerkzeuges 9 in und entgegen der Y-Richtung für die jeweilige Bearbeitungsaufgabe angepasst sein.

Der Werkstückauflage 28 gegenüberliegend ist die weitere Werkstückauflage 29 am Maschinenrahmen 2 vorgesehen. Diese kann beispielsweise einer Entladestation zugeordnet sein. Alternativ kann die Be- und Entladung des unbearbeiteten Werkstücks 10 und bearbeiteten Werkstücks 10 mit Werkstücken 81 auch derselben Werkstückauflage 28, 29 zugeordnet sein.

Die Werkzeugmaschine 1 kann des Weiteren eine Laserbearbeitungsvorrichtung 201, insbesondere eine Laserschneidmaschine, aufweisen, welche nur schematisch in einer Draufsicht in Figur 5 dargestellt ist. Diese Laserbearbeitungsvorrichtung 201 kann beispielsweise als eine CO₂-Laserschneidmaschine ausgebildet sein. Die Laserbearbeitungsvorrichtung 201 umfasst eine Laserquelle 202, welche einen Laserstrahl 203 erzeugt, der mittels einer schematisch dargestellten Strahlführung 204 zu einem Laserbearbeitungskopf, insbesondere Laserschneidkopf 206, geführt und in diesem fokussiert wird. Danach wird der Laserstrahl 204 durch eine Schneiddüse senkrecht zur Oberfläche des Werkstückes 10 ausgerichtet, um das Werkstück 10 zu bearbeiten. Der Laserstrahl 203 wirkt am Bearbeitungsort, insbesondere Schneidort vorzugsweise gemeinsam mit einem Prozessgasstrahl auf das Werkstück 10 ein. Die Schneidstelle, an welcher der Laserstrahl 203 auf das Werkstück 10 auftrifft, ist benachbart zur Bearbeitungsstelle des Oberwerkzeuges 11 und Unterwerkzeuges 9.

Der Laserschneidkopf 206 ist durch einen Linearantrieb 207 mit einem Linearachsensystem zumindest in Y-Richtung, vorzugsweise in Y- und Z-Richtung, verfahrbar. Dieses Linearachsensystem, welches den Laserschneidkopf 206 aufnimmt, kann dem Maschinenrahmen 2 zugeordnet, daran befestigt oder darin integriert sein. Unterhalb eines Arbeitsraumes des Laserschneidkopfes 206 kann eine Strahldurchtrittsöffnung in der Werkstückauflage 28 vorgesehen sein. Vorzugsweise kann unterhalb der Strahldurchtrittsöffnung eine Strahlauffangvorrichtung für den Laserstrahl 21 vorgesehen sein. Die Strahldurchtrittsöffnung und gegebenenfalls die Strahlauffangvorrichtung können auch als eine Baueinheit ausgebildet sein.

Die Laserbearbeitungsvorrichtung 201 kann alternativ auch einen Festkörperlaser als Laserquelle 202 aufweisen, dessen Strahlung mit Hilfe eines Lichtleitkabels zum Laserschneidkopf 206 geführt wird.

Die Werkstückauflage 28, 29 kann sich bis unmittelbar an die Werkstückabstützung 8 erstrecken, welche das Unterwerkzeug 9 zumindest teilweise umgibt. Innerhalb eines sich dazwischen ergebenden Freiraumes ist das Unterwerkzeug 9 entlang der unteren Positionierachse 25 in und entgegen der Y-Richtung verfahrbar.

Auf der Werkstückauflage 28 liegt beispielsweise ein bearbeitetes Werkstück 10 auf, bei welchem ein Werkstückteil 81 von einem Schneidspalt 83 beispielsweise durch eine Stanzbearbeitung oder durch eine Laserstrahlbearbeitung bis auf eine Restverbindung 82 freigeschnitten ist. Durch diese Restverbindung wird das Werkstück 81 in dem Werkstück 10 bzw. dem verbleibenden Restgitter gehalten. Zum Abtrennen des Werkstückteils 81 vom Werkstück 10 wird das Werkstück 10 mittels der Vorschubeinrichtung 22 zum Ober- und Unterwerkzeug 11, 9 für einen Abstanz- und Ausschleusschritt positioniert. Dabei wird die Restverbindung 82 durch einen Stanzhub des Oberwerkzeuges 11 zum Unterwerkzeug 9 getrennt. Das Werkstückteil 81 kann beispielsweise durch teilweises Absenken der Werkstückabstützung 8 nach unten ausgeschleust werden. Alternativ kann bei größeren Werkstückteilen 81 das freigeschnittene Werkstückteil 81 wieder zurück auf die Werkstückauflage 28 oder auf die Werkstückauflage 29 übergeführt werden, um das Werkstückteil 81 und das Restgitter zu entladen. Auch können kleine Werkstückteile 81 gegebenenfalls durch eine Öffnung im Unterwerkzeug 9 ausgeschleust werden.

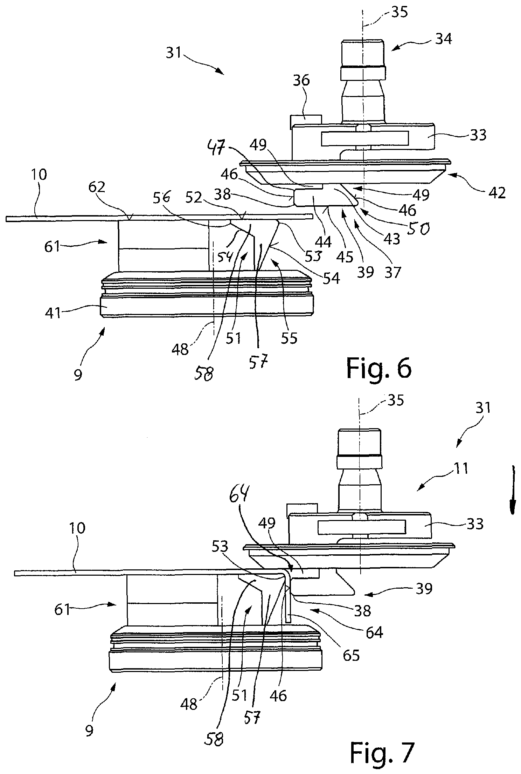

In Figur 6 ist eine schematische Seitenansicht einer ersten Ausführungsform des Werkzeugs 31 dargestellt. Dieses Werkzeug 31 ist bevorzugt als Biegewerkzeug ausgebildet. Das Werkzeug 31 umfasst ein Oberwerkzeug 11 und ein Unterwerkzeug 9. Das Oberwerkzeug 11 umfasst einen Grundkörper 33, an welchem ein Einspannschaft 34 angeordnet ist. Dieser kann um eine Positionsachse 35 drehbar in der Werkzeugaufnahme der Werkzeugmaschine 1 angeordnet sein. An dem Grundkörper 33 kann des Weiteren ein Indexierkeil 36 vorgesehen sein, um einen an dem Grundkörper 33 vorgesehenen Werkzeugkörper 39 auszurichten. Der Werkzeugkörper 39 ist dem Einspannschaft 34 gegenüberliegend am Grundkörper 33 vorgesehen. Dieser umfasst am freien äußeren Ende zumindest eine Biegekante 38, von welcher aus sich eine Druckfläche 45 erstreckt. Dem Grundkörper 33 zugeordnet kann ein Abstreifer 42 vorgesehen sein.

Der Werkzeugkörper 39 umfasst einen Druckkörper 43, an dem die Biegekante 38 vorgesehen ist. Die Biegekante 38 ist gegenüber dem Druckkörper 43 an einem hervorstehenden Abschnitt 44 angeordnet. An der Biegekante 38 angrenzend sind die Druckfläche 45 sowie eine Freifläche 46 vorgesehen. Im ersten Ausführungsbeispiel des Werkzeugkörpers 39 ist die Druckfläche 45 und die Freifläche 46 beispielsweise in einem rechten Winkel angeordnet. Dazwischenliegend ist die Biegekante 38 vorgesehen. Dieser Werkzeugkörper 39 weist eine L-förmige Kontur auf. Der Druckkörper 43 geht in einen stegförmigen Abschnitt über, der den hervorstehenden Abschnitt 44 bildet. Die Breite des Werkzeugkörpers 39 beziehungsweise die Länge der Biegekante 38 kann anwendungsspezifisch für die Einbringung einer Abkantung in das Werkstück 10 ausgebildet sein.

Bei diesem in Figur 6 dargestellten Werkzeugkörper 39 ist bevorzugt eine zweite Biegekante 47 ausgebildet. Zwischen der ersten und zweiten Biegekante 38, 47 liegt die Freifläche 46. Diese wird dadurch begrenzt. Dieser ersten Biegekante 38 kann eine dritte Biegekante 50 gegenüberliegen. Diese ist vorzugsweise um 180° gedreht zur ersten Biegekante 38 ausgerichtet. Zwischen der Druckfläche 45 und der der dritten Biegekante 50 zugeordneten Freifläche 46 ist auch ein hervorstehender Abschnitt 44 gebildet, wobei die der dritten Biegekante 50 zugeordnete Freifläche 46 einem Winkel von kleiner als 90° zur Druckfläche 45 angeordnet ist.

Zwischen der zweiten Biegekante 47 und dem Grundkörper 33 sowie auch zwischen der dritten Biegekante 50 und dem Grundkörper 33 ist jeweils eine Hinterschneidung 49 gebildet, deren Funktionsweise anhand der nachfolgenden Arbeitsschritte noch erläutert wird.

Das Werkzeug 31 umfasst des Weiteren dem Oberwerkzeug 11 gegenüberliegend das Unterwerkzeug 9. Dieses Unterwerkzeug 9 umfasst einen Grundkörper 41. An dem Grundkörper 41 ist ein Gegenwerkzeugkörper 51 ausgebildet. Dieser Gegenwerkzeugkörper 51 umfasst einen Druckkörper 57 mit zumindest einem hervorstehenden Abschnitt 58. An dem Druckkörper 57 ist eine Auflagefläche 52 vorgesehen, die gegenüber dem Grundkörper 41 in Richtung auf das Oberwerkzeug 11 hervorsteht. Die Auflagefläche 52 ist durch eine Biegekante 53 begrenzt. An diese Biegekante 53 schließt sich eine Freifläche 54 an. Diese Freifläche 54 ist an einem Winkel von weniger als 90° zur Auflagefläche 52 vorgesehen. Dadurch ist eine Hinterschneidung 55 zwischen der Biegekante 53 des Gegenwerkzeugkörpers 51 und dem Grundkörper 41 gebildet.

Bei diesem Werkzeug 31 ist beispielsweise die erste Biegekante 38 außermittig zur Positionsachse 35 des Oberwerkzeugs 11 ausgebildet. Die dritte Biegekante 50 ist bevorzugt in der Positionsachse 35 vorgesehen.

Die Biegekante 53 des Gegenwerkzeugkörpers 51 ist bevorzugt außerhalb einer Positionsachse 48 des Unterwerkzeugs 9 vorgesehen. Der Gegenwerkzeugkörper 51 kann auch eine zweite Biegekante 56 aufweisen, die zur Positionsachse 48 weisend ausgerichtet beziehungsweise zum Gegenhalter 61 weisend ausgerichtet ist und mit Abstand dazu oder in der Positionsachse 48 liegt.

An dem Grundkörper 41 ist des Weiteren ein Gegenhalter 61 vorgesehen, der wiederum eine Abstützfläche 62 aufweist. Auf dieser Abstützfläche liegt das Werkstück 10 auf. Bevorzugt liegen die Abstützfläche 62 und die Auflagefläche 52 in einer gemeinsamen Ebene. Alternativ kann die Abstützfläche 62 auch gegenüber der Auflagefläche 52 erhöht sein.

Zur Einbringung einer Abkantung 64 an einem Werkstück 10, welche einen Biegewinkel von kleiner als 90° umfasst, ist bevorzugt folgender Arbeitsablauf vorgesehen:

Die zum Einsatz kommende Biegekante 38 an dem Werkzeugkörper 39 des Oberwerkzeugs 11 und die Biegekante 53 des Gegenwerkzeugkörpers 41 am Unterwerkzeug 9 werden aufeinander zuweisend ausgerichtet. Diesbezüglich kann eine Drehbewegung oder Verfahrbewegung des Oberwerkzeugs und/oder des Unterwerkzeugs 11, 9 angesteuert werden. Dadurch wird eine Ausgangsposition gemäß Figur 6 angesteuert. Gleichzeitig sind die einander gegenüberliegenden Biegekanten 38, 53 in Abhängigkeit der Dicke des Werkstücks 12 zueinander beabstandet beziehungsweise ausgerichtet.

In einer ersten Arbeitsphase, welche in Figur 7 dargestellt ist, wird beispielsweise das Oberwerkzeug 11 auf das Unterwerkzeug 9 zubewegt. Alternativ kann auch das Unterwerkzeug 9 auf das Oberwerkzeug 11 zubewegt werden. Auch eine Relativbewegung des Oberwerkzeugs 11 und des Unterwerkzeugs aufeinander zu ist möglich. Die erste Biegekante 38 am Oberwerkzeug 11 wird an der ersten Biegekante 53 des Unterwerkzeugs 9 vorbeigeführt. Dadurch erfolgt eine erste Abkantung 64 um 90° eines Schenkels 65 entlang der Biegekante 53 am Unterwerkzeug 9. Ein Abstreifer 42, welcher fakultativ an dem Oberwerkzeug 11 vorgesehen sein kann, liegt bereits vor einer ersten Hubbewegung des Oberwerkzeugs 11 und/oder des Unterwerkzeugs 9 auf dem Werkstück 10 auf. Dies weist den Vorteil auf, dass eine unkontrollierte Durchbiegung des Werkstücks 10 während dem Biegevorgang verhindert werden kann. Nach der Abkantung eines Schenkels um 90° ist eine erste Biegephase abgeschlossen.

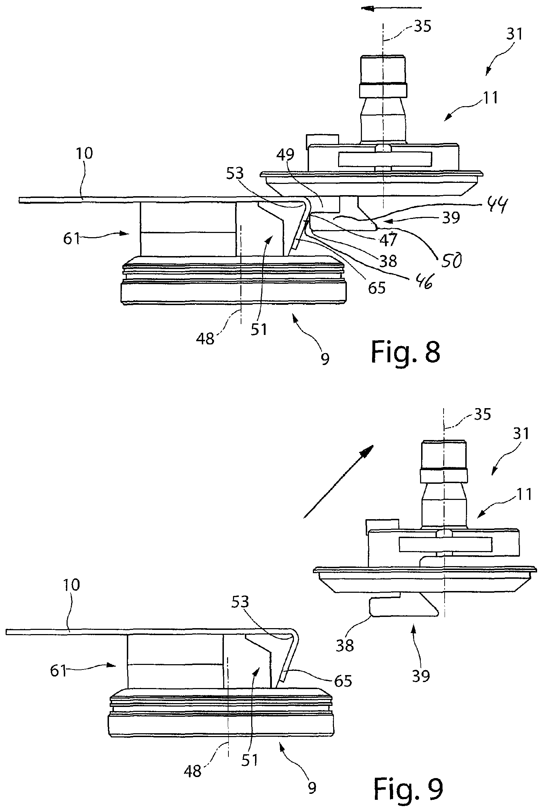

Darauffolgend wird eine zweite Biegephase eingeleitet. Das Ende der zweiten Biegephase ist in Figur 8 dargestellt. Bei dieser zweiten Biegephase kann das Unterwerkzeug 9 und/oder das Oberwerkzeug 11 mit einer Verfahrbewegung entlang deren Positionierachsen 16, 25 angesteuert werden. Darauffolgend wird der Schenkel 65 an die Freifläche 54 des Gegenwerkzeugkörpers 51 anliegend übergeführt. Die Abkantung 64 weist einen Biegewinkel von kleiner als 90° auf. Durch die Ausbildung einer Hinterschneidung 49 zwischen dem Werkzeugkörper 39 und dem Grundkörper 33 am Oberwerkzeug 11 kann eine Abkantung von größer als 90° in den Schenkel 65 eingebracht werden. Der hervorstehende Abschnitt 44 weist bevorzugt parallel zur ersten Biegekante 38 die Freifläche 46 begrenzend eine weitere Biegekante 47 (Figur 8) auf, die bei dieser Ausgestaltung zum Einsatz kommt.

Nach dem Einbringen der Abkantung 64 wird zwischen dem Oberwerkzeug 11 und/oder Unterwerkzeug 9 eine Freifahrbewegung angesteuert.

In Figur 9 ist eine erste Freifahrbewegung dargestellt. Bei dieser Freifahrbewegung wird das Oberwerkzeug 11 sowohl durch eine Verfahrbewegung entlang der oberen Positionsachse 16 als auch der oberen Positionsachse 35 angesteuert, sodass eine überlagerte Verfahrbewegung in Y- und Z-Richtung erfolgen kann. Das Unterwerkzeug 9 kann dabei ruhend positioniert bleiben.

Alternativ kann eine Freifahrbewegung dahingehend angesteuert werden, dass das Unterwerkzeug 9 mit dem Werkstück 10 entlang der unteren Positionierachse 25 und unteren Positionsachse 48 verfahren wird, sodass eine überlagerte Verfahrbewegung in Y- und Z-Richtung des Unterwerkzeugs 9 erfolgen kann.

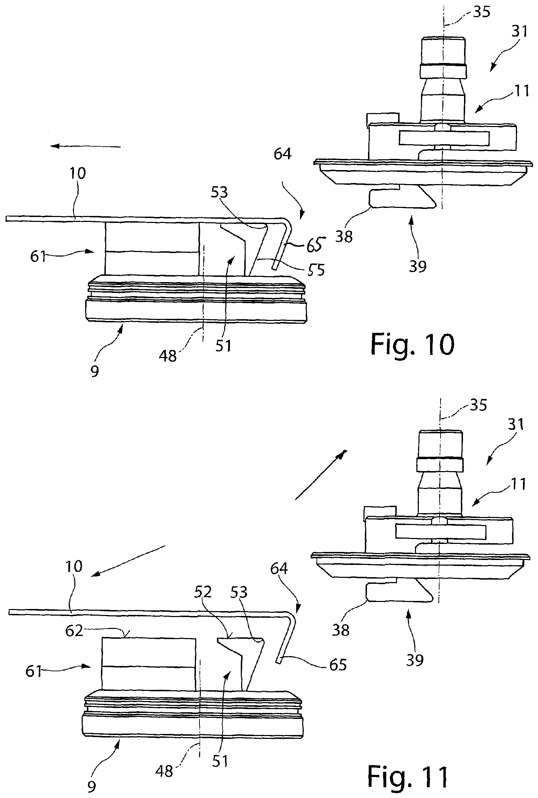

In Figur 10 ist eine weitere alternative Freifahrbewegung zu Figur 9 dargestellt. Bei dieser Ausführungsform wird nur das Unterwerkzeug 9 entlang der unteren Positionierachse 25 verfahren, sodass sich diese vom Oberwerkzeug 11 entfernt. Gleichzeitig kann sich die Abkantung 64 des Werkstücks 10 von dem Gegenwerkzeugkörper 51 lösen und gegenüber der Hinterschneidung 55 freikommen. Alternativ ist ebenso möglich, dass nur das Oberwerkzeug 11 entlang der oberen Positionierachse 16 verfahren wird. Ebenso können das Oberwerkzeug 11 und Unterwerkzeug 9 gleichzeitig in entgegengesetzter Richtung entlang deren Positionierachsen 16, 25 verfahren werden.

In Figur 11 ist eine weitere alternative Ausgestaltung der Freifahrbewegung zu den Figuren 9 und 11 dargestellt. Bei dieser Ausführungsform wird das Unterwerkzeug 9 durch eine Überlagerung einer Verfahrbewegung entlang der Y-Achse und der Z-Achse vom Oberwerkzeug 11 entfernt. Des Weiteren wird das Oberwerkzeug 11 mit einer Überlagerung einer Verfahrbewegung entlang der Y-Achse und der Z-Achse angesteuert, sodass sowohl das Oberwerkzeug 11 als auch das Unterwerkzeug 9 voneinander entfernt werden. Darauffolgend kann das Werkstück 10 entnommen werden. Das Freifahren kann überlagert stattfinden. Eine Kombination aus allen Varianten ist auch möglich.

Bei dem in den Figuren 6 bis 11 dargestellten Werkzeug 31, insbesondere dem Werkzeugkörper 39 des Oberwerkzeugs 11, kann auch die zweite Biegekante 48 zur Einbringung einer Abkantung zum Einsatz kommen. Hierzu wird lediglich das Oberwerkzeug 11 um 180° um die Positionsachse 35 geschwenkt. Darauffolgend können die in den Figuren 6 bis 11 dargestellten Arbeitsschritte analog durchgeführt werden.

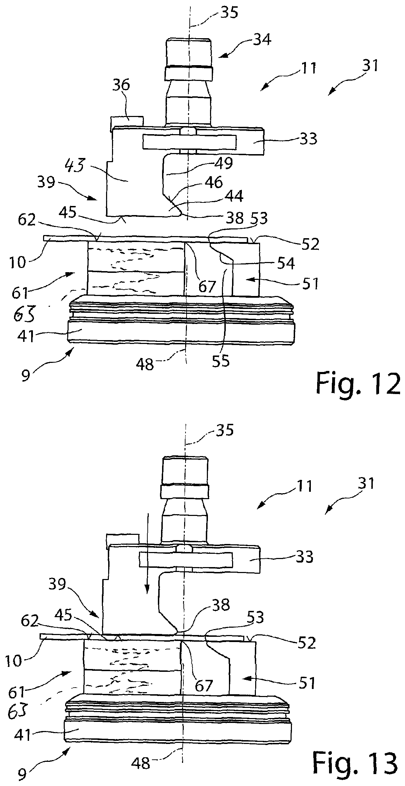

Das in den Figuren 6 bis 11 dargestellte Werkzeug 31 kann auch in der Weise eingesetzt werden, wie dies in den nachfolgenden Figuren 12 bis 18 anhand einer alternativen Ausführungsform des Werkzeugs 31 beschrieben wird.

Das Werkzeug 31 in Figur 12 weist ebenfalls ein Oberwerkzeug 11 und ein Unterwerkzeug 9 auf. Das Oberwerkzeug 11 weicht von dem Oberwerkzeug 11 gemäß Figur 6 dahingehend ab, dass kein Abstreifer 42 vorgesehen ist. Dieser kann ebenso fakultativ angebracht werden. Des Weiteren sind die Geometrie und Ausgestaltung des Werkzeugkörpers 39 abweichend. Der prinzipielle Aufbau des Werkzeugs 10 ist jedoch derselbe. Dieser Werkzeugkörper 39 gemäß dem Oberwerkzeug 11 in Figur 12 weist einen Druckkörper 43 auf, der eine Druckfläche 45 umfasst. An einem hervorstehenden Abschnitt 44 ist die Biegekante 38 ausgebildet. Die Druckfläche 45 geht in die Biegekante 38 über, von der aus sich die Freifläche 43 erstreckt. Beispielsweise sind die Freifläche 43 und die Druckfläche 43 in einem Winkel von kleiner als 90° vorgesehen. Die Biegekante 38 liegt vorteilhafterweise in der Positionsachse 35 des Oberwerkzeugs 11. Zwischen der Biegekante 38 und dem Grundkörper 33 ist die Hinterschneidung 49 gebildet.

Das Unterwerkzeug 9 weist einen analogen Aufbau zum Unterwerkzeug 9 gemäß Figur 6 auf. Der Gegenwerkzeugkörper 51 weist beispielsweise nur eine Biegekante 53 auf, die in Richtung auf den Gegenhalter 61 ausgerichtet ist. Der Gegenhalter 61 umfasst die Gegenhaltefläche 62. Bei dieser Ausführungsform des Unterwerkzeugs 9 kann bei einer Druckbelastung des Oberwerkzeugs 11 auf den Gegenhalter 61 dieser in den Grundkörper 41 eintauchen. Durch ein Rückstellelement 63 kann die Gegenhaltefläche 62 des Gegenhalters 61 wieder in eine Ausgangsposition zurückgeführt werden. In dieser Ausgangsposition ist die Gegenhaltefläche 62 in derselben Ebene wie die Auflagefläche 52 des Gegenwerkzeugkörpers 51 oder ist dieser gegenüber erhaben positioniert.

Zur Einbringung einer Abkantung 64 wird das Oberwerkzeug 11 zum Unterwerkzeug 9 - wie beispielsweise in Figur 12 dargestellt - ausgerichtet und positioniert. Die Biegekante 38 des Werkzeugkörpers 39 am Oberwerkzeug 11 wird zum Gegenhalter 61 ausgerichtet, sodass eine zur Biegekante 53 ausgerichtete Stirnkante 67 des Gegenhalters 61 der Biegekante 38 gegenüberliegt. Das Werkstück 10 liegt auf dem Gegenhalter 61 und dem Gegenwerkzeugkörper 51 auf. Der für die Abkantung 64 vorgesehene Schenkel 55 wird bezüglich dessen gewünschten Länge zur Abkantung 64 zur Biegekante 53 ausgerichtet.

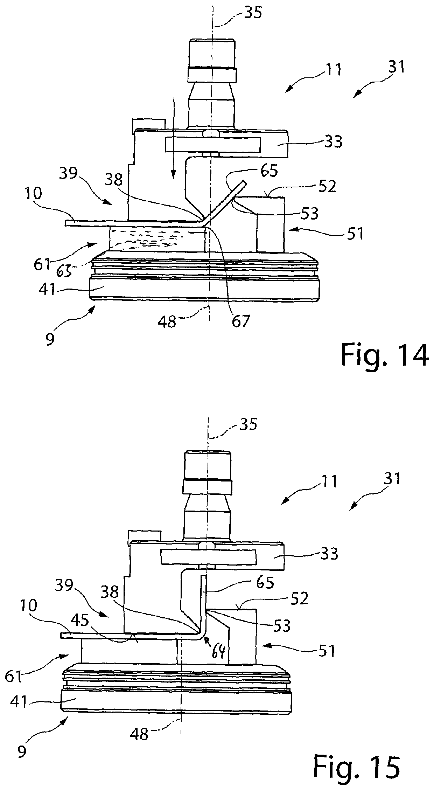

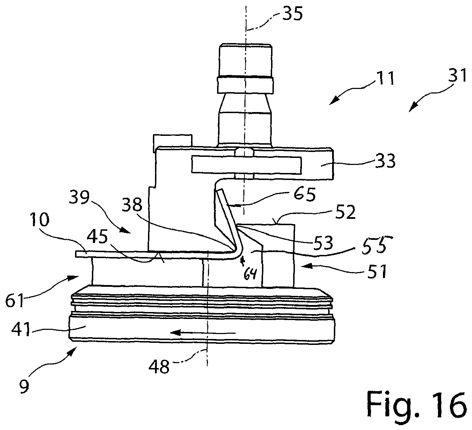

Ausgehend von einer ersten Arbeitsposition gemäß Figur 12 erfolgt eine Hubbewegung des Oberwerkzeugs 11 in Richtung auf das Unterwerkzeug 9. Alternativ kann die Hubbewegung ausschließlich durch das Unterwerkzeug 9 erfolgen. Ebenso ist eine Kombination einer Verfahrbewegung des Oberwerkzeugs 11 und Unterwerkzeugs 9 möglich. Die Druckfläche 45 liegt zunächst an dem Werkstück 10 an. Darauffolgend wird das Werkstück 10 zwischen der Druckfläche 45 des Werkzeugkörpers 39 des Oberwerkzeugs 11 und der Gegenhaltefläche 62 des Gegenhalters 61 geklemmt gehalten. In einer ersten Biegephase wird das Oberwerkzeug 11 weiter in Richtung auf das Unterwerkzeug 9 zubewegt, also insbesondere entlang der Positionsachse 35 verfahren. Der Gegenhalter 61 taucht in den Grundkörper 41 des Unterwerkzeugs 9 ein. Die Klemmung des Werkstücks 10 wird weiterhin aufrechterhalten. Dies ist beispielsweise in Figur 14 dargestellt. Diese Hubbewegung wird so lange durchgeführt, bis die Biegekante 38 des Werkzeugkörpers 39 unterhalb der Biegekante 53 des Gegenwerkzeugkörpers 51 gelangt ist, sodass die jeweiligen Biegekanten 38, 53 in die jeweiligen Hinterschneidungen 49, 55 bei einer weiteren Verfahrbewegung gelangen können. Darauffolgend wird eine Verfahrbewegung des Oberwerkzeugs 11 und/oder des Unterwerkzeugs 9 entlang deren Positionsachsen 16, 25 eingeleitet. Dies ist in Figur 15 dargestellt. Dabei wird der Schenkel 65 zunächst um 90° gebogen, wie dies in Figur 15 dargestellt ist. Bei einer weiteren Verfahrbewegung des Oberwerkzeugs 11 und/oder Unterwerkzeug 9 entlang deren Positionierachsen aufeinander zu wird die Position des Oberwerkzeugs 11 zum Unterwerkzeug 9 gemäß Figur 16 eingenommen. Die Abkantung 64 weist nunmehr einen Biegewinkel von kleiner als 90° auf.

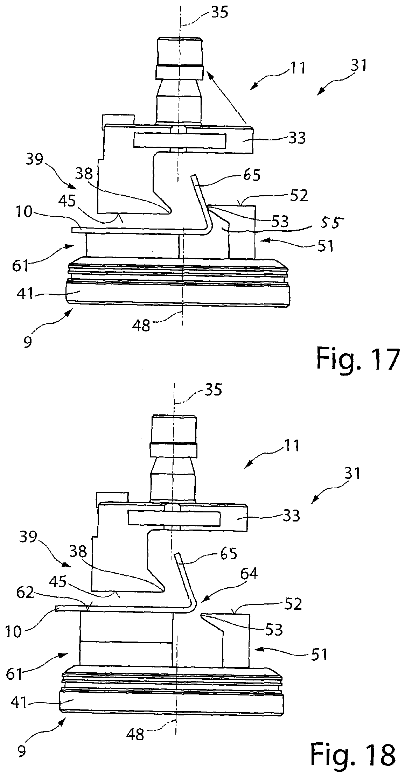

Anschließend wird eine Freifahrbewegung des Werkzeugs 31 angesteuert. Beispielsweise kann eine erste Freifahrbewegung dahingehend erfolgen, dass das Oberwerkzeug 11 in eine Verfahrrichtung in Y- und Z-Richtung verfahren wird, wie dies in Figur 17 dargestellt ist. Alternativ kann auch das Unterwerkzeug 9 in einer Y- und Z-Richtung verfahren werden, sodass dieses gegenüber dem Oberwerkzeug 11 freikommt. Nach der Freifahrbewegung kehrt der Gegenhalter 61 in die Ausgangsposition zurück, wie dies in Figur 18 dargestellt ist. Darauffolgend kann das Werkstück 10 aus der Werkzeugmaschine 1 entnommen oder für einen weiteren Bearbeitungsschritt positioniert werden.

Die vorbeschriebene Arbeitsweise gemäß den Figuren 12 bis 18 kann auch durch das in den Figuren 6 bis 11 dargestellte Werkzeug 31 erfolgen. In diesem Fall wäre das Unterwerkzeug 9 ebenfalls mit einem eintauchbaren Gegenhalter 61 auszubilden. Bevorzugt kommen dabei die in der Positionsachse 35 liegende Biegekante 48 des Werkzeugkörpers 39 und die Biegekante 56 des Gegenwerkzeugkörpers 51 gemäß Figur 6 zum Einsatz.

## Patentansprüche

1. Werkzeug zum Bearbeiten von plattenförmigen Werkstücken, insbesondere Blechen,
- mit einem Oberwerkzeug (11) und einem Unterwerkzeug (9), die zur Bearbeitung eines dazwischen angeordneten Werkstücks (10) in einer Hubrichtung aufeinander zu und in Gegenrichtung bewegbar sind, wobei
- das Oberwerkzeug (11) einen Einspannschaft (34) und einen Grundkörper (33) aufweist, und mit einem dem Einspannschaft (34) gegenüberliegend am Grundkörper (33) angeordneten Werkzeugkörper (39), der eine Biegekante (38) aufweist, und
- das Unterwerkzeug (9) einen Grundkörper (41) aufweist, an dem ein Gegenwerkzeugkörper (51) mit einer Biegekante (53) vorgesehen ist und mit einem an dem Grundkörper (41) des Unterwerkzeugs (9) vorgesehenen Gegenhalter (61), wobei die Biegekante (53) des Gegenwerkzeugkörpers (51) in Richtung auf den Gegenhalter (61) oder entgegengesetzt zu dem Gegenhalter (61) weisend ausgerichtet ist,
- die Biegekante (38) des Werkzeugkörpers (39) ortsfest zum Grundkörper (33) des Oberwerkzeugs (11) und die Biegekante (53) am Unterwerkzeug (9) einer Hinterschneidung (55) am Gegenwerkzeugkörper (51) zugeordnet ist,
**dadurch gekennzeichnet,**
- **dass** die Biegekante (53) des Gegenwerkzeugkörpers (51) ortsfest zum Grundkörper (41) des Unterwerkzeugs (9) vorgesehen ist, und
- **dass** die Biegekante (38) des Oberwerkzeugs (11) einer Hinterschneidung (49) am Werkzeugkörper (39) zugeordnet ist.

2. Werkzeug nach Anspruch 1, **dadurch gekennzeichnet, dass** der Werkzeugkörper (39) einen Druckkörper (43) umfasst und die Biegekante (38) an einem gegenüber dem Druckkörper (43) hervorstehenden Abschnitt (44) vorgesehen ist, sodass zwischen dem Grundkörper (33) und der an dem hervorstehenden Abschnitt (44) angeordneten Biegekante (38) die Hinterschneidung (49) gebildet ist und/oder der Gegenwerkzeugkörper (51) einen Druckkörper (57) umfasst und die Biegekante (53) an einem gegenüber dem Druckkörper (57) hervorstehenden Abschnitt (58) vorgesehen ist, sodass zwischen dem Grundkörper (41) und der an dem hervorstehenden Abschnitt (58) angeordneten Biegekante (53) eine Hinterschneidung (55) gebildet ist.

3. Werkzeug nach einem der vorgehenden Ansprüche, **dadurch gekennzeichnet, dass** der Gegenhalter (61) eine Gegenhaltefläche (62) aufweist, die parallel zu einer Druckfläche (45) des Werkzeugkörpers (39) des Oberwerkzeugs (11) ausgerichtet ist und vorzugsweise Werkzeug nach Anspruch 3, **dadurch gekennzeichnet, dass** die Gegenhaltefläche (62) des Gegenhalters (61) in einer Ausgangsposition zum Grundkörper (41) des Unterwerkzeugs (9) in einer Ebene zur Biegekante (53) des Gegenwerkzeugkörpers (51) des Unterwerkzeugs (9) liegt.

4. Werkzeug nach einem der vorgehenden Ansprüche, **dadurch gekennzeichnet, dass** der Gegenwerkzeugkörper (51) außermittig zur Positionsachse (48) des Grundkörpers (41) des Unterwerkzeugs (9) und der Gegenhalter (61) mit Abstand zur Biegekante (53) des Gegenwerkzeugkörpers (51) am Grundkörper (41) des Unterwerkzeugs (9) angeordnet ist.

5. Werkzeug nach einem der vorgehenden Ansprüche, **dadurch gekennzeichnet, dass** die Biegekante (38) des Werkzeugkörpers (39) außermittig zur Positionsachse (35) des Grundkörpers (33) vom Oberwerkzeug (11) vorgesehen ist.

6. Werkzeug nach einem der vorgehenden Ansprüche, **dadurch gekennzeichnet, dass** an dem hervorstehenden Abschnitt (44) des Werkzeugkörpers (39) wenigstens die eine Biegekante (38) zwischen einer Druckfläche (45) und einer Freifläche (46) gebildet ist, die von der Biegekante (38) des Werkzeugkörpers (39) aus in einem Winkel von 90° oder weniger als 90° ausgerichtet sind, und vorzugsweise Werkzeug nach Anspruch 7, **dadurch gekennzeichnet, dass** an dem hervorstehenden Abschnitt (44) eine weitere Biegekante (47) vorgesehen ist, welche die Freifläche (46) begrenzt und zwischen der weiteren Biegekante (47) und dem Werkzeugkörper (39) oder einem Abstreifer (42), der der Biegekante (47) zugeordnet ist, eine Hinterschneidung (49) gebildet ist.

7. Werkzeug nach Anspruch 6, **dadurch gekennzeichnet, dass** an dem hervorstehenden Abschnitt (44) eine dritte Biegekante (50) vorgesehen ist, welche die Druckfläche (45) begrenzt und zwischen der dritten Biegekante (50) und dem Werkzeugkörper (39) oder einem Abstreifer (42), der der dritten Biegekante (50) zugeordnet ist, eine Hinterschneidung (49) gebildet ist.

8. Werkzeug nach einem der vorgehenden Ansprüche, **dadurch gekennzeichnet, dass** der hervorstehende Abschnitt (58) des Gegenwerkzeugkörpers (51) durch eine Auflagefläche (52) und zumindest eine Freifläche (54) gebildet ist, die sich von der Biegekante (53, 56) des Gegenwerkzeugkörpers (51) aus erstrecken und in einem Winkel von 90° oder weniger als 90° zueinander ausgerichtet sind.

9. Werkzeug nach einem der Ansprüche 6 bis 8, **dadurch gekennzeichnet, dass** zumindest die Ausrichtung der Freiflächen (46, 54) am Werkzeugkörper (39) und Gegenwerkzeugkörper (51) gleich sind und vorzugsweise die Ausrichtung der Freiflächen (46, 54) vom Werkzeugkörper (39) und am Gegenwerkzeugkörper (51) im Winkel zur Druckfläche (45) und Auflagefläche (52) gleich sind.

10. Werkzeug nach Anspruch 6, **dadurch gekennzeichnet, dass** die zumindest eine Biegekante (38, 47, 50) des Werkzeugkörpers (39) und/oder die zumindest eine Biegekante (52, 56) des Gegenwerkzeugkörpers (51) als eine Körperkante mit einem Umformradius oder als rotierende Rolle ausgebildet ist.

11. Werkzeug nach einem der vorhergehenden Ansprüche, **dadurch gekennzeichnet, dass** der Gegenhalter (61) in Richtung auf die Oberseite des Unterwerkzeugs (9) verfahrbar an dem Grundkörper (41) des Unterwerkzeugs (9) vorgesehen ist, und vorzugsweise Werkzeug nach Anspruch 13, **dadurch gekennzeichnet, dass** der Gegenhalter (61) gegen zumindest ein Rückstellelement (63) in Richtung auf den Grundkörper (41) eintauchbar vorgesehen ist und das zumindest eine Rückstellelement (63) den Gegenhalter (61) in eine Ausgangsposition benachbart zur Biegekante (53) des Gegenwerkzeugkörpers (51) positioniert.

12. Werkzeugmaschine zum Bearbeiten von plattenförmigen Werkstücken, vorzugsweise von Blechen,
- mit einem Oberwerkzeug (11), welches entlang einer Hubachse (14) mit einer Hubantriebsvorrichtung (13) in Richtung auf ein mit dem Oberwerkzeug (11) zu bearbeitenden Werkstück (10) und in Gegenrichtung bewegbar ist und welches entlang einer senkrecht zur Hubachse (14) verlaufenden oberen Positionierachse (16) positionierbar ist und mit einer motorischen Antriebsanordnung (17) entlang der oberen Positionierachse (16) verfahrbar ist,
- mit einem Unterwerkzeug (9), welches zum Oberwerkzeug (11) ausgerichtet und entlang einer unteren Positionierachse (25) positionierbar ist, die senkrecht zur Hubachse (14) des Oberwerkzeugs (11) ausgerichtet und mit einer motorischen Antriebsanordnung (26) entlang der unteren Positionierachse (25) verfahrbar ist,
- mit einer Steuerung (15), durch welche die motorische Antriebsanordnungen (17, 26) zum Verfahren des Ober- und Unterwerkzeugs (11, 9) ansteuerbar sind,
**dadurch gekennzeichnet,**
- **dass** die Verfahrbewegung des Oberwerkzeugs (11) entlang der oberen Positionierachse (16) und die Verfahrbewegung des Unterwerkzeugs (9) entlang der unteren Positionierachse (25) jeweils unabhängig voneinander ansteuerbar sind, und
- **dass** ein Werkzeug nach einem der Ansprüche 1 bis 11 zum Bearbeiten von Werkstücken (10) vorgesehen ist.

13. Werkzeugmaschine nach Anspruch 12, **dadurch gekennzeichnet, dass** das Oberwerkzeugs (11) und/oder Unterwerkzeug (9) mit einer Hubbewegung und/oder einer Drehbewegung um die Positionsachse (35, 48) jeweils unabhängig voneinander ansteuerbar sind.

14. Verfahren zum Bearbeiten von plattenförmigen Werkstücken, vorzugsweise Blechen,
- bei dem ein Oberwerkzeug (11), welches entlang einer Hubachse (14) mit einer Hubantriebsvorrichtung (13) in Richtung auf ein mit dem Oberwerkzeug (11) zu bearbeitenden Werkstück (10) und in Gegenrichtung bewegbar ist und welches entlang einer senkrecht zur Hubachse (14) verlaufenden oberen Positionierachse (16) positionierbar ist, mit einer motorischen Antriebsanordnung (17) entlang der oberen Positionierachse (16) verfahren wird,
- bei dem ein Unterwerkzeug (9), welches zum Oberwerkzeug (11) ausgerichtet und entlang einer unteren Positionierachse (25) positionierbar ist, die senkrecht zur Hubachse (14) des Oberwerkzeugs (11) ausgerichtet ist, mit einer motorischen Antriebsanordnung (26) entlang der unteren Positionierachse (25) verfahren wird,
- bei dem mit einer Steuerung (15) die Antriebsanordnungen (17, 26) zum Verfahren des Oberund Unterwerkzeugs (11, 9) angesteuert werden, **dadurch gekennzeichnet,**
- **dass** zur Herstellung von Abkantungen (64) an einem Schenkel (65) des Werkstücks (10) ein Werkzeug (31) nach einem der Ansprüche 1 bis 11 eingesetzt wird. und Verfahren nach Anspruch 17, **dadurch gekennzeichnet, dass** eine Abkantung (64) an einem Schenkel (65) des Werkstücks (10) in einem Winkel von kleiner 90° eingebracht und eine Hinterschneidung gebildet wird,
wobei Verfahren nach Anspruch 17, **dadurch gekennzeichnet,**
- **dass** zur Herstellung der Abkantungen (64) an dem Schenkel (65) des Werkstücks (10) mit einem Winkel von kleiner als 90° der Schenkel (65) des Werkstücks (10) auf einen Gegenhalter (61) und die Biegekante (53) des Gegenwerkzeugkörpers (51) am Unterwerkzeug (9) aufgelegt wird,
- das Oberwerkzeug (11) und/oder das Unterwerkzeug (9) aufeinander zu verfahren werden,
- in einer ersten Biegephase die Biegekante (38) des Oberwerkzeugs (11) und/oder die Biegekante (53) des Unterwerkzeugs (9) aneinander vorbeigeführt werden und eine erste Biegung um 90° eingebracht wird,
- in einer zweiten Biegephase das Oberwerkzeug (11) und/oder das Unterwerkzeug (9) entlang deren Positionierachsen (16, 25) verfahren werden, bis die Biegekante (38) des Werkzeugkörpers (39) des Oberwerkzeugs (11) und die Biegekante (53) des Gegenwerkzeugkörpers (51) des Unterwerkzeugs (9) einander hintergreifen, und
- das Oberwerkzeug (11) und/oder Unterwerkzeug (9) darauffolgend mit einer Freifahrbewegung angesteuert wird oder
wobei Verfahren nach Anspruch 17, **dadurch gekennzeichnet,**
- **dass** zur Herstellung der Abkantungen (64) an dem Schenkel (65) des Werkstücks (10) mit einem Winkel von kleiner 90° das Werkstück (10) auf einen Gegenhalter (61) und die Biegekante (53) des Gegenwerkzeugkörpers (51) am Unterwerkzeug (9) aufgelegt wird,
- das Oberwerkzeug (11) in Hubrichtung auf das Unterwerkzeug (9) verfahren wird,
- das Werkstück (10) zwischen der Druckfläche (45) des Werkzeugkörpers (39) und der Gegenhaltefläche (62) des Gegenhalters (61) geklemmt gehalten wird,
- das Oberwerkzeug (11) und/oder Unterwerkzeug (9) in einer ersten Biegephase mit einer weiteren Verfahrbewegung aufeinander zu angesteuert werden und der Gegenhalter (61) unter Klemmung des Werkstücks (10) relativ zum Unterwerkzeug (9) verfahren und eine erste Biegung eines Schenkels (65) eingeleitet wird,
- in einer zweiten Biegephase das Oberwerkzeug (11) und/oder das Unterwerkzeug (9) entlang deren Positionierachsen (16, 25) verfahren werden, bis die Biegekante (38) des Werkzeugkörpers (39) des Oberwerkzeugs (11) und die Biegekante (53) des Gegenwerkzeugkörpers (51) des Unterwerkzeugs (9) einander hintergreifen, und
- das Oberwerkzeug (11) darauffolgend mit einer Freifahrbewegung zum Unterwerkzeug (9) angesteuert wird.

15. Verfahren nach Anspruch 14, **dadurch gekennzeichnet, dass** der Gegenhalter (61) durch das Rückstellelement (63) nach der Freifahrbewegung des Oberwerkzeugs (11) zum Unterwerkzeug (9) in die Ausgangsposition zurückgeführt wird.

## Claims

1. Tool for machining planar workpieces, in particular metal sheets,
- comprising an upper tool (11) and a lower tool (9), which are moveable towards one another in a stroke direction, and in the counter direction, in order to machine a workpiece (10) arranged there between, wherein
- the upper tool (11) comprises a clamping shaft (34) and a main body (33), and has a tool body (39) that is arranged on the main body (33) so as to be opposite the clamping shaft (34) and comprises a bending edge (38), and
- the lower tool (9) comprises a main body (41), on which a counter tool body (51) having a bending edge (53) is provided, and having a counterhold (61) that is provided on the main body (41) of the lower tool (9), wherein the bending edge (53) of the counter tool body (51) is oriented so as to face in the direction of the counterhold (61), or opposite to the counterhold (61)
- the bending edge (38) of the tool body (39) is provided so as to be stationary relative to the main body (33) of the upper tool (11), and the bending edge (53) on the lower tool (9) is associated with an undercut (55) on the counter tool body (51),
**characterized in that**
- the bending edge (53) of the counter tool body (51) is provided so as to be stationary relative to the main body (41) of the lower tool (9), and
- the bending edge (38) of the upper tool (11) is associated with an undercut (49) on the tool body (39) .

2. Tool according to claim 1, **characterized in that** the tool body (39) comprises a pressure body (43), and the bending edge (38) is provided on a portion (44) that protrudes relative to the pressure body (43), such that the undercut (49) is formed between the main body (33) and the bending edge (38) arranged on the protruding portion (44), and/or the counter tool body (51) comprises a pressure body (57) and the bending edge (53) is provided on a portion (58) that protrudes relative to the pressure body (57), such that an undercut (55) is formed between the main body (41) and the bending edge (53) arranged on the protruding portion (58).

3. Tool according to either of the preceding claims, **characterized in that** the counterhold (61) comprises a counter holding surface (62) that is oriented so as to be parallel to a pressure surface (45) of the tool body (39) of the upper tool (11)and preferably the counter holding surface (62) of the counterhold (61) is located in a plane relative to the bending edge (53) of the counter tool body (51) of the lower tool (9), in an initial position relative to the main body (41) of the lower tool (9).

4. Tool according to any of the preceding claims, **characterized in that** the counter tool body (51) is arranged so as to be off-center relative to the position axis (48) of the main body (41) of the lower tool (9), and the counterhold (61) is arranged at a distance from the bending edge (53) of the counter tool body (51), on the main body (41) of the lower tool (9).

5. Tool according to any of the preceding claims, **characterized in that** the bending edge (38) of the tool body (39) is provided so as to be off-center relative to the position axis (35) of the main body (33) of the upper tool (11).

6. Tool according to any of the preceding claims, **characterized in that** at least one bending edge (38) is formed on the protruding portion (44) of the tool body (39), between a pressure surface (45) and a free surface (46), which surfaces are oriented so as to be at an angle of 90° or of less than 90°, proceeding from the bending edge (38) of the tool body (39)and preferably
a further bending edge (47) is provided on the protruding portion (44), which further bending edge defines the free surface (46), and an undercut (49) is formed between the further bending edge (47) and the tool body (39) or a scraper (42) that is associated with the bending edge (47).

7. Tool according to claim 6, **characterized in that** a third bending edge (50) is provided on the protruding portion (44), which third bending edge defines the pressure surface (45), and an undercut (49) is formed between the third bending edge (50) and the tool body (39) or a scraper (42) that is associated with the third bending edge (50).

8. Tool according to any of the preceding claims, **characterized in that** the protruding portion (58) of the counter tool body (51) is formed by a rest surface (52) and at least one free surface (54) which extend from the bending edge (53, 56) of the counter tool body (51) and are oriented so as to be at an angle of 90° or of less than 90° relative to one another.

9. Tool according to any of claims 6 to 8, **characterized in that** at least the orientation of the free surfaces (46, 54) on the tool body (39) and counter tool body (51) is the same, and preferably the orientation of the free surfaces (46, 54) of the tool body (39) and on the counter tool body (51), at an angle to the pressure surface (45) and rest surface (52), is the same.

10. Tool according to either claim 6, **characterized in that** the at least one bending edge (38, 47, 50) of the tool body (39) and/or the at least one bending edge (52, 56) of the counter tool body (51) is formed as a body edge having a shaping radius or is formed as a rotating roll.

11. Tool according to any of the preceding claims, **characterized in that** the counterhold (61) is provided on the main body (41) of the lower tool (9) so as to be moveable in the direction of the upper face of the lower tool (9)and preferably
the counterhold (61) is provided so as to be insertable in the direction of the main body (41), counter to at least one restoring element (63), and the at least one restoring element (63) positions the counterhold (61) adjacently to the bending edge (53) of the counter tool body (51), in an initial position.

12. Machine tool for machining planar workpieces, preferably metal sheets,
- comprising an upper tool (11) which is moveable along a stroke axis (14), by means of a stroke drive device (13), in the direction of a workpiece (10) that is to be machined by the upper tool (11), and in the counter direction, and which is positionable along an upper positioning axis (16) that runs perpendicularly to the stroke axis (14), and is moveable along the upper positioning axis (16) by means of a motor drive assembly (17),
- comprising a lower tool (9) which is oriented towards the upper tool (11) and is positionable along a lower positioning axis (25) oriented perpendicularly to the stroke axis (14) of the upper tool (11), and which is moveable along the lower positioning axis (25) by means of a motor drive assembly (26),
- comprising a controller (15), by means of it is possible to actuate the motor drive assemblies (17, 26) for moving the upper and lower tool (11, 9),
**characterized in that**
- the traversing movement of the upper tool (11) along the upper positioning axis (16) and the traversing movement of the lower tool (9) along the lower positioning axis (25) is each controllable independently of one another, and
- a tool according to any of claims 1 to 11 is provided for machining workpieces (10).

13. Machine tool according to claim 12, **characterized in that** the upper tool (11) and/or lower tool (9) is each controllable independently of one another by means of a stroke movement and/or a rotary movement about the position axis (35, 48).

14. Method for machining planar workpieces, preferably metal sheets,
- in which an upper tool (11), which is moveable along a stroke axis (14), by means of a stroke drive device (13), in the direction of a workpiece (10) that is to be machined by the upper tool (11), and in the counter direction, and which is positionable along an upper positioning axis (16) that runs perpendicularly to the stroke axis (14), is moved along the upper positioning axis (16) by means of a motor drive assembly (17),
- in which a lower tool (9), which is oriented towards the upper tool (11) and is positionable along a lower positioning axis (25) oriented perpendicularly to the stroke axis (14) of the upper tool (11), is moved along the lower positioning axis (25) by means of a motor drive assembly (26),
- in which a controller (15) actuates the motor drive assemblies (17, 26) for moving the upper and lower tool (11, 9),
**characterized in that**
- a tool (31) according to any of claims 1 to 11 is used in order to produce chamfers (64) on a limb (65) of the workpiece (10)and a chamfer (64) on a limb (65) of the workpiece (10) is made at an angle of less than 90°, and an undercut is formed, wherein
- in order to produce the chamfers (64) on the limb (65) of the workpiece (10) having an angle of less than 90°, the limb (65) of the workpiece (10) is placed on a counterhold (61) and the bending edge (53) of the counter tool body (51) is placed on the lower tool (9),
- the upper tool (11) and/or the lower tool (9) are moved towards one another,
- in a first bending phase, the bending edge (38) of the upper tool (11) and/or the bending edge (53) of the lower tool (9) are moved past one another and a first bend by 90° is made,
- in a second bending phase, the upper tool (11) and/or the lower tool (9) are moved along the positioning axes (16, 25) thereof until the bending edge (38) of the tool body (39) of the upper tool (11) and the bending edge (53) of the counter tool body (51) of the lower tool (9) engage behind one another, and
- the upper tool (11) and/or lower tool (9) are subsequently controlled by means of a release movement, or wherein
- in order to produce the chamfers (64) on the limb (65) of the workpiece (10) having an angle of less than 90°, the workpiece (10) is placed on a counterhold (61) and the bending edge (53) of the counter tool body (51) is placed on the lower tool (9),
- the upper tool (11) is moved towards the lower tool (9), in the stroke direction,
- the workpiece (10) is held in a clamped manner between the pressure surface (45) of the tool body (39) and the counter holding surface (62) of the counterhold (61),
- in a first bending phase, the upper tool (11) and/or lower tool (9) are controlled so as to move towards one another, by means of a further traversing movement, and the counterhold (61) is moved relative to the lower tool (9), while clamping the workpiece (10), and a first bend of a limb (65) is made,
- in a second bending phase, the upper tool (11) and/or the lower tool (9) are moved along the positioning axes (16, 25) thereof until the bending edge (38) of the tool body (39) of the upper tool (11) and the bending edge (53) of the counter tool body (51) of the lower tool (9) engage behind one another, and
- the upper tool (11) is subsequently controlled by means of a release movement relative to the lower tool (9).

15. Method according to either claim 14, **characterized in that** the counterhold (61) is returned into the initial position by means of the restoring element (63), following the release movement of the upper tool (11) relative to the lower tool (9).

## Revendications

1. Outil destiné à usiner des pièces en forme de plaque, en particulier des tôles,
- pourvu d'un outil supérieur (11) et d'un outil inférieur (9) qui peuvent se déplacer, en vue d'usiner une pièce (10) disposée entre eux, dans un sens de course l'un vers l'autre et en sens opposé,
- l'outil supérieur (11) présentant une tige de serrage (34) et un corps de base (33), et étant pourvu d'un corps d'outil (39) qui est disposé sur le corps de base (33), à l'opposé de la tige de serrage (34), et qui présente une arête de pliage (38), et
- l'outil inférieur (9) présentant un corps de base (41) sur lequel est prévu un corps de contre-outil (51) avec une arête de pliage (53), et étant pourvu d'un bras support (61) prévu sur le corps de base (41) de l'outil inférieur (9), l'arête de pliage (53) du corps de contre-outil (51) étant orientée en direction du bras support (61) ou en direction opposée audit bras support (61),
- l'arête de pliage (38) du corps d'outil (39) étant disposée de manière fixe par rapport au corps de base (33) de l'outil supérieur (11), et l'arête de pliage (53) prévue sur l'outil inférieur (9) étant associée à une contre-dépouille (55) prévue sur le corps de contre-outil (51),
**caractérisé en ce que**
- l'arête de pliage (53) du corps de contre-outil (51) est prévue de manière fixe par rapport au corps de base (41) de l'outil inférieur (9), et
- l'arête de pliage (38) de l'outil supérieur (11) est associée à une contre-dépouille (49) prévue sur le corps d'outil (39).

2. Outil selon la revendication 1, **caractérisé en ce que** le corps d'outil (39) comprend un corps de pression (43) et que l'arête de pliage (38) est prévue sur une partie (44) faisant saillie par rapport au corps de pression (43) de sorte que la contre-dépouille (49) est formée entre le corps de base (33) et l'arête de pliage (38) disposée sur la partie en saillie (44), et/ou **en ce que** le corps de contre-outil (51) comprend un corps de pression (57) et que l'arête de pliage (53) est prévue sur une partie (58) faisant saillie par rapport au corps de pression (57) de sorte qu'une contre-dépouille (55) est formée entre le corps de base (41) et l'arête de pliage (53) disposée sur la partie en saillie (58) .

3. Outil selon l'une quelconque des revendications précédentes, **caractérisé en ce que** le bras support (61) présente une surface de contre-support (62) qui est orientée parallèlement à une surface de pression (45) du corps d'outil (39) de l'outil supérieur (11), et **en ce que** de préférence la surface de contre-support (62) du bras support (61) se situe, alors que celui-ci se trouve dans une position initiale par rapport au corps de base (41) de l'outil inférieur (9), dans un même plan que l'arête de pliage (53) du corps de contre-outil (51) de l'outil inférieur (9).

4. Outil selon l'une quelconque des revendications précédentes, **caractérisé en ce que** le corps de contre-outil (51) est disposé de manière excentrée par rapport à l'axe de position (48) du corps de base (41) de l'outil inférieur (9) et que le bras support (61) est disposé sur le corps de base (41) de l'outil inférieur (9) à une distance donnée de l'arête de pliage (53) du corps de contre-outil (51) .

5. Outil selon l'une quelconque des revendications précédentes, **caractérisé en ce que** l'arête de pliage (38) du corps d'outil (39) est prévue de manière excentrée par rapport à l'axe de position (35) du corps de base (33) de l'outil supérieur (11).

6. Outil selon l'une quelconque des revendications précédentes, **caractérisé en ce que** sur la partie en saillie (44) du corps d'outil (39) est formée ladite au moins une arête de pliage (38), et ce entre une surface de pression (45) et une surface libre (46), lesquelles sont orientées selon un angle de 90° ou inférieur à 90° à partir de l'arête de pliage (38) du corps d'outil (39), et **en ce que** de préférence sur la partie en saillie (44) est prévue une autre arête de pliage (47) qui limite la surface libre (46) et qu'une contre-dépouille (49) est formée entre l'autre arête de pliage (47) et le corps d'outil (39) ou un racleur (42) qui est affecté à ladite arête de pliage (47).

7. Outil selon la revendication 6, **caractérisé en ce que** sur la partie en saillie (44) est prévue une troisième arête de pliage (50) qui limite la surface de pression (45) et qu'une contre-dépouille (49) est formée entre la troisième arête de pliage (50) et le corps d'outil (39) ou un racleur (42) qui est affecté à ladite troisième arête de pliage (50).

8. Outil selon l'une quelconque des revendications précédentes, **caractérisé en ce que** la partie en saillie (58) du corps de contre-outil (51) est formée par une surface d'appui (52) et au moins une surface libre (54), lesquelles s'étendent à partir de l'arête de pliage (53, 56) du corps de contre-outil (51) et sont orientées l'une par rapport à l'autre selon un angle de 90° ou inférieur à 90°.

9. Outil selon l'une quelconque des revendications 6 à 8, **caractérisé en ce qu'**au moins l'orientation des surfaces libres (46, 54) prévues sur le corps d'outil (39) et sur le corps de contre-outil (51) est identique et que de préférence l'orientation des surfaces libres (46, 54) prévues sur le corps d'outil (39) et sur le corps de contre-outil (51) présente le même angle par rapport à la surface de pression (45) et à la surface d'appui (52).

10. Outil selon la revendication 6, **caractérisé en ce que** ladite au moins une arête de pliage (38, 47, 50) du corps d'outil (39) et/ou ladite au moins une arête de pliage (52, 56) du corps de contre-outil (51) est réalisée en tant qu'arête de corps pourvue d'un rayon de formage ou en tant que rouleau rotatif.

11. Outil selon l'une quelconque des revendications précédentes, **caractérisé en ce que** le bras support (61) est prévu sur le corps de base (41) de l'outil inférieur (9) de manière à pouvoir se déplacer en direction de la face supérieure dudit outil inférieur (9) et que de préférence le bras support (61) est prévu de manière à pouvoir plonger en direction du corps de base (41) en allant à l'encontre d'au moins un élément de rappel (63) et qu'au moins un élément de rappel (63) positionne le bras support (61) dans une position initiale contiguë à l'arête de pliage (53) du corps de contre-outil (51).

12. Machine-outil destinée à usiner des pièces en forme de plaque, de préférence des tôles,
- pourvue d'un outil supérieur (11) qui peut être déplacé le long d'un axe de levage (14) grâce à un dispositif d'entraînement de levage (13) en direction d'une pièce (10) qui doit être usinée avec l'outil supérieur (11), voire en direction opposée, et qui peut être positionné le long d'un axe de positionnement supérieur (16) s'étendant perpendiculairement à l'axe de levage (14) et qui peut être déplacé le long dudit axe de positionnement supérieur (16) grâce à un mécanisme d'entraînement à moteur (17),
- pourvue d'un outil inférieur (9) qui est orienté par rapport à l'outil supérieur (11) et qui peut être positionné le long d'un axe de positionnement inférieur (25) qui est orienté perpendiculairement à l'axe de levage (14) de l'outil supérieur (11) et qui peut être déplacé le long dudit axe de positionnement inférieur (25) grâce à un mécanisme d'entraînement à moteur (26),
- pourvue d'une commande (15) grâce à laquelle les mécanismes d'entraînement à moteur (17, 26) destinés à déplacer les outils supérieur et inférieur (11, 9) peuvent être activés,
**caractérisée en ce que**
- le mouvement de déplacement de l'outil supérieur (11) le long de l'axe de positionnement supérieur (16) et le mouvement de déplacement de l'outil inférieur (9) le long de l'axe de positionnement inférieur (25) peuvent être activés, chacun, indépendamment l'un de l'autre, et
- un outil selon l'une quelconque des revendications 1 à 11 est prévu en vue d'usiner des pièces (10).

13. Machine-outil selon la revendication 12, **caractérisée en ce que** l'outil supérieur (11) et/ou l'outil inférieur (9) peuvent être activés, chacun, indépendamment l'un de l'autre de manière à effectuer un mouvement de course et/ou un mouvement de rotation autour de l'axe de position (35, 48).

14. Procédé destiné à usiner des pièces en forme de plaque, de préférence des tôles,
- lors duquel un outil supérieur (11) qui peut être déplacé le long d'un axe de levage (14) grâce à un dispositif d'entraînement de levage (13) en direction d'une pièce (10) qui doit être usinée avec l'outil supérieur (11), voire dans la direction opposée, et qui peut être positionné le long d'un axe de positionnement supérieur (16) s'étendant perpendiculairement à l'axe de levage (14) est déplacé le long dudit axe de positionnement supérieur (16) grâce à un mécanisme d'entraînement à moteur (17),
- lors duquel un outil inférieur (9) qui est orienté par rapport à l'outil supérieur (11) et qui peut être positionné le long d'un axe de positionnement inférieur (25) qui est orienté perpendiculairement à l'axe de levage (14) de l'outil supérieur (11) est déplacé le long dudit axe de positionnement inférieur (25) grâce à un mécanisme d'entraînement à moteur (26),
- lors duquel les mécanismes d'entraînement (17, 26) destinés à déplacer les outils supérieur et inférieur (11, 9) sont activés grâce à une commande (15),
**caractérisé en ce que**
- un outil (31) selon l'une quelconque des revendications 1 à 11 est utilisé en vue de réaliser des plis (64) sur une branche (65) de la pièce (10),
- et un pli (64) est réalisé sur une branche (65) de la pièce (10) selon un angle inférieur à 90° et une contre-dépouille est ainsi formée,
- la branche (65) de la pièce (10) étant posée sur un bras support (61) et sur l'arête de pliage (53) du corps de contre-outil (51) prévu sur l'outil inférieur (9) en vue de réaliser lesdits plis (64) sur la branche (65) de la pièce (10) avec un angle inférieur à 90°,
- l'outil supérieur (11) et/ou l'outil inférieur (9) sont déplacés l'un vers l'autre,
- dans une première étape de pliage, l'arête de pliage (38) de l'outil supérieur (11) et/ou l'arête de pliage (53) de l'outil inférieur (9) se croisent, et un premier pli à 90° est ainsi réalisé,
- dans une deuxième étape de pliage, l'outil supérieur (11) et/ou l'outil inférieur (9) sont déplacés le long de leur axe de positionnement respectif (16, 25) jusqu'à ce que l'arête de pliage (38) du corps d'outil (39) de l'outil supérieur (11) et l'arête de pliage (53) du corps de contre-outil (51) de l'outil inférieur (9) entrent en prise l'une dans l'autre par l'arrière, et
- l'outil supérieur (11) et/ou l'outil inférieur (9) sont ensuite activés de manière à effectuer un mouvement de dégagement ou
- la pièce (10) étant posée sur un bras support (61) et sur l'arête de pliage (53) du corps de contre-outil (51) prévu sur l'outil inférieur (9) en vue de réaliser lesdits plis (64) sur la branche (65) de la pièce (10) avec un angle inférieur à 90°,
- l'outil supérieur (11) est déplacé en sens de course vers l'outil inférieur (9),
- la pièce (10) est maintenue serrée entre la surface de pression (45) du corps d'outil (39) et la surface de contre-support (62) du bras support (61),
- dans une première étape de pliage, l'outil supérieur (11) et/ou l'outil inférieur (9) sont activés de manière à effectuer un autre mouvement de déplacement l'un vers l'autre et le bras support (61) est déplacé par rapport à l'outil inférieur (9) alors que la pièce (10) est maintenue serrée, et un premier pliage d'une branche (65) est initié,
- dans une deuxième étape de pliage, l'outil supérieur (11) et/ou l'outil inférieur (9) sont déplacés le long de leur axe de positionnement respectif (16, 25) jusqu'à ce que l'arête de pliage (38) du corps d'outil (39) de l'outil supérieur (11) et l'arête de pliage (53) du corps de contre-outil (51) de l'outil inférieur (9) entrent en prise l'une dans l'autre par l'arrière, et
- l'outil supérieur (11) est ensuite activé de manière à effectuer un mouvement de dégagement par rapport à l'outil inférieur (9).

15. Procédé selon la revendication 14, **caractérisé en ce que** le bras support (61) est ramené dans sa position initiale par l'élément de rappel (63) après que l'outil supérieur (11) a effectué son mouvement de dégagement par rapport à l'outil inférieur (9).
